# EUROPEAN PATENT SPECIFICATION

(11) **EP 3 432 532 B1**
(45) Date of publication and mention of the grant of the patent: **01.12.2021**
(21) Application number: 16900200.3
(22) Date of filing: 26.10.2016
(51) Int. Cl.: H04L 29/06, H04W 12/00, H04W 12/04, H04W 12/50

(54) **KEY DISTRIBUTION AND AUTHENTICATION METHOD, APPARATUS AND SYSTEM**
VERFAHREN ZUR VERTEILUNG UND AUTHENTIFIZIERUNG VON SCHLÜSSELN, VORRICHTUNG UND SYSTEM
PROCÉDÉ, APPAREIL ET SYSTÈME DE DISTRIBUTION ET D'AUTHENTIFICATION DE CLÉ

(30) Priority: 27.04.2016 CN 201610268327
(43) Date of publication of application: 23.01.2019
(73) Proprietor: Huawei Technologies Co., Ltd., Longgang District Shenzhen, Guangdong 518129 (CN)
(72) Inventor: ZHANG, Bo, Shenzhen Guangdong 518129 (CN); WU, Rong, Shenzhen Guangdong 518129 (CN); GAN, Lu, Shenzhen Guangdong 518129 (CN); WANG, Haiguang, Shenzhen Guangdong 518129 (CN)
(74) Representative: Epping - Hermann - Fischer
(86) International application number: PCT/CN2016/103334
(87) International publication number: WO 2017/185692

(56) References cited:
- EP-A1- 1 526 677
- EP-A1- 1 662 691
- CN-A- 101 005 359
- CN-A- 101 388 770
- CN-A- 102 082 665
- US-A1- 2013 142 328

## Description

### TECHNICAL FIELD

The present invention relates to the communications field, and in particular, to a key distribution and authentication method and system, and an apparatus.

### BACKGROUND

With development of communications network technologies, more devices, such as mobile phones, computers, unmanned aerial vehicles, and other Internet of things devices, start to join networks and send and receive data by using communications networks. There are also more companies, such as power companies, water companies, or heat companies, that implement communication between various intelligent devices implementing enterprise services and management centers of the companies by using communications networks.

To ensure secure communication, an intelligent device and a network usually perform mutual authentication based on a root key to establish a secure channel. The root key used in the mutual authentication process is configured in advance by a network operator or deployed in the intelligent device and the network. The existing authentication methods are all based on the Authentication and Key Agreement (AKA) protocol proposed by the International Mobile Telecommunications Organization, but the AKA protocol-based authentication method relies on the root key stored in a universal subscriber identity module (USIM) card, that is, requires the intelligent device to support the USIM card.

However, a large quantity of low-cost Internet of things devices or enterprise intelligent devices that access the network have simple functions and structures, and cannot be provided with functionally complex USIM cards, thereby failing to implement AKA protocol-based authentication and failing to apply existing authentication methods to establish secure communication channels. Therefore, existing root key deployment methods and authentication methods cannot be applied to secure communication between networks and an increasing quantity of intelligent devices that do not support USIM cards. As a result, security of communication between these intelligent devices and networks cannot be ensured.

Document EP 1 526 677 A1 refers to a mutual authentication method in which mutual authentication is carried out securely and conveniently. In order to achieve this, in the mutual authentication process, a private key K₀, being an initial value, is stored in a client and a server (Pc 0, Ps 0). The client generates a random number R, calculates secret data C and authentication data A, and transmits the data items to the server (Pc 1). The server receives the authentication data A and the secret data C from the client, and generates a random number Q, calculates secret data S, and authentication data B and returns the data items, as well as updating the private key K₀ with a private key K₁ (Ps 1). The client receives from the server the authentication data B and the secret data S, generates the random number R, calculates secret data C₂, authentication data A₂, and returns the data items to the server, and updates the private key K₀ with the private key K₁(Pc 2). The client and the server check whether or not validity is established (Psₘ₊₁, Pcₘ₊₁). Further in the authentication method above, there is a method for generating a onetime ID, assuming that the onetime ID is identification information usable just one time in the authentication between a plurality of devices or application. In each of the devices or applications which carries out the authentication, a variable shared key which changes per predefined communication unit requiring the authentication is generated, a function value of one-way function is obtained in which the variable shared key is used as an argument, a onetime ID hard to tap and superior in security is generated based on the function value, and the onetime ID is utilized.

Document EP 1 662 691 A1 discloses a device authentication system capable of authenticating devices efficiently using the common key system. When a CE device requests service offerings from a service server, the service server in turn requests the CE device to be authenticated by a device authentication server. Given the request, the CE device causes the device authentication server to perform device authentication on that device and transmits the result of the device authentication to the service server. Upon receipt of the device authentication result from the CE device, the service server causes the device authentication server to check that the authentication has been performed correctly and then starts offering services to the CE device. The CE device and device authentication server share a pass phrase, and each of the two parties checks that the other party indeed retains the pass phrase for mutual authentication.

### SUMMARY

The claimed invention relates to a method and a terminal device as defined in independent claims 1 and 2, respectively.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show some embodiments of the present invention, and a person of ordinary skill in the art may derive other drawings from these accompanying drawings without creative efforts.
FIG. 1 is a schematic diagram of a system architecture in Embodiment 1 of a key distribution and authentication method according to the present invention;
FIG. 2 is a signaling flowchart of Embodiment 1 of a key distribution and authentication method according to the present invention;
FIG. 3 is a signaling flowchart of Embodiment 1 of a key authentication method according to the present invention;
FIG. 4 is a signaling flowchart of Embodiment 2 of a key authentication method according to the present invention;
FIG. 5 is a signaling flowchart of Embodiment 3 of a key authentication method according to the present invention;
FIG. 6 is a signaling flowchart of Embodiment 4 of a key authentication method according to the present invention;
FIG. 7 is a signaling flowchart of Embodiment 5 of a key authentication method according to the present invention;
FIG. 8 is a signaling flowchart of Embodiment 6 of a key authentication method according to the present invention;
FIG. 9 is a signaling flowchart of Embodiment 7 of a key authentication method according to the present invention;
FIG. 10 is a signaling flowchart of Embodiment 8 of a key authentication method according to the present invention;
FIG. 11 is a signaling flowchart of Embodiment 9 of a key authentication method according to the present invention;
FIG. 12 is a signaling flowchart of Embodiment 10 of a key authentication method according to the present invention;
FIG. 13 is a signaling flowchart of Embodiment 11 of a key authentication method according to the present invention;
FIG. 14 is a signaling flowchart of Embodiment 12 of a key authentication method according to the present invention;
FIG. 15 is a signaling flowchart of Embodiment 13 of a key authentication method according to the present invention;
FIG. 16 is a schematic structural diagram of Embodiment 1 of a user management server according to the present invention;
FIG. 17 is a schematic structural diagram of Embodiment 1 of a service center server according to the present invention;
FIG. 18 is a schematic structural diagram of Embodiment 1 of a terminal device according to the present invention;
FIG. 19 is a schematic structural diagram of Embodiment 1 of a network authentication server according to the present invention; and
FIG. 20 is a schematic structural diagram of Embodiment 2 of a network authentication server according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention.

The terms "include", "contain" and any other variants in the specification and claims of the present invention mean to cover the non-exclusive inclusion, for example, a process, method, system, product, or device that includes a list of steps or units is not necessarily limited to those steps or units, but may include other steps or units not expressly listed or inherent to such a process, method, product, or device.

The embodiments of the present invention provide a key distribution and authentication method and a device, so as to distribute a key to a terminal device, so that the terminal device performs mutual authentication with a network authentication server based on the distributed key to obtain a communication key, and then the terminal device can connect to a communications network based on the communication key and perform secure communication. The following uses specific embodiments to describe in detail a system architecture for key distribution and authentication in the embodiments of the present invention.

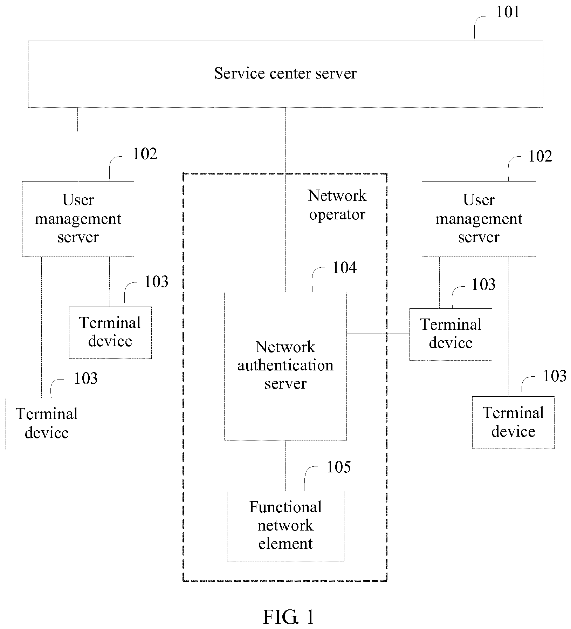

FIG. 1 is a schematic diagram of a system architecture in Embodiment 1 of the key distribution and authentication method according to the present invention. As shown in FIG. 1, the system architecture includes a service center server 101, a user management server 102, a terminal device 103, a network authentication server 104, and a functional network element 105. The service center server 101 is configured to securely generate and allocate a first-level key to the user management server 102. When the user management server 102 sends a first key request message, the service center server 101 allocates different first-level keys to different user management servers 102 based on different user identifiers of the user management servers 102. The service center server 101 may also distribute keys of different types or with different security levels for different service types of the user management server 102 by using different algorithms. The service center server 101 may be controlled by a network operator, or may be controlled by a third party independent of the network operator and the user management server. The service center server 101 may be specifically a server, a base station, a workstation, a computer, a gateway, and the like. That the service center server 101 is a server is merely used as an example rather than a limitation in this embodiment of the present invention. The user management server 102 may be a company or an enterprise, or may be an end user or a terminal, and one or more terminal devices 103 are deployed for the user management server 102. In an example shown in FIG. 1, one user management server 102 manages two terminal devices 103. A person skilled in the art should understand that this imposes no limitation on the embodiments of the present invention. The user management server 102 is configured to securely generate and allocate a second-level key to the terminal device 103 managed by the user management server 102. After receiving a first-level key sent by the service center server 101, the user management server 102 generates different second-level keys based on different device identifiers of terminal devices 103. The user management server 102 may also distribute second-level keys of different types or with different security levels for different service types of the terminal device 103 by using different algorithms. The terminal device 103 may be an intelligent device such as a mobile phone, a tablet computer, or an intelligent terminal, or may be a communications device such as a server, or may be an Internet of Things device such as a sensor, an electricity meter, or a water meter. The network authentication server 104 and the functional network element 105 are controlled by a network operator. The network authentication server 104 is configured to perform mutual authentication with the terminal device 103 based on a distributed second-level key to obtain a communication key. The network authentication server 104 may be specifically a mobility management entity (Mobility Management Entity, MME for short), a home subscriber server (Home Subscriber Server, HSS for short), a controller, a control node, a gateway, a server, or the like. The functional network element 105 is configured to implement secure communication with the terminal device 103 based on a communication key obtained in an authentication process. The functional network element 105 may be specifically a data plane anchor used by the terminal device 103 to access a communications network, or may be a core network server, a control node, or a user plane gateway such as a PDH device, an SDH-ADM, a DACS, a TEM, an REG, and a PCM.

Optionally, the service center server 101 includes a service authentication server and a key management server. For example, the service authentication server communicates with the user management server 102, and the key management server communicates with the network authentication server 104; the service authentication server receives a first key request message sent by the user management server 102, and forwards the first key request message to the key management server; when the key management server generates a first-level key, the key management server sends the first-level key to the user management server 102 by using the service authentication server; the user management server 102 generates a second-level key based on the first-level key, and sends the second-level key to the terminal device 103; and when the terminal device 103 and the network authentication server 104 perform mutual authentication based on a symmetric key technology, the key management server may directly send the first-level key to the network authentication server 104, so that the network authentication server 104 generates the second-level key based on the first-level key. Alternatively, the service authentication server may communicate with the network authentication server 104, and the key management server directly communicates with the user management server 102; the key management server directly receives a first key request message sent by the user management server 102, and directly sends a generated first-level key to the user management server 102; and when the terminal device 103 and the network authentication server 104 perform mutual authentication based on a symmetric key technology, the key management server sends the first-level key to the network authentication server 104 by using the service authentication server. Alternatively, the service authentication server may communicate with the user management server 102 and the network authentication server 104, the key management server communicates with only the service authentication server, and the service authentication server directly communicates with the user management server 102; the service authentication server directly receives a first key request message sent by the user management server 102, and directly sends a first-level key generated by the key management server to the user management server 102; and when the terminal device 103 and the network authentication server 104 perform mutual authentication based on a symmetric key technology, the service authentication server sends the first-level key to the network authentication server 104.

On the basis of the foregoing system architecture, the following describes in detail, by using specific embodiments, the technical solutions of the present invention and methods for implementing the technical solutions of the present invention. The following specific embodiments may be combined with each other, and a same or similar concept or process may not be described repeatedly in some embodiments.

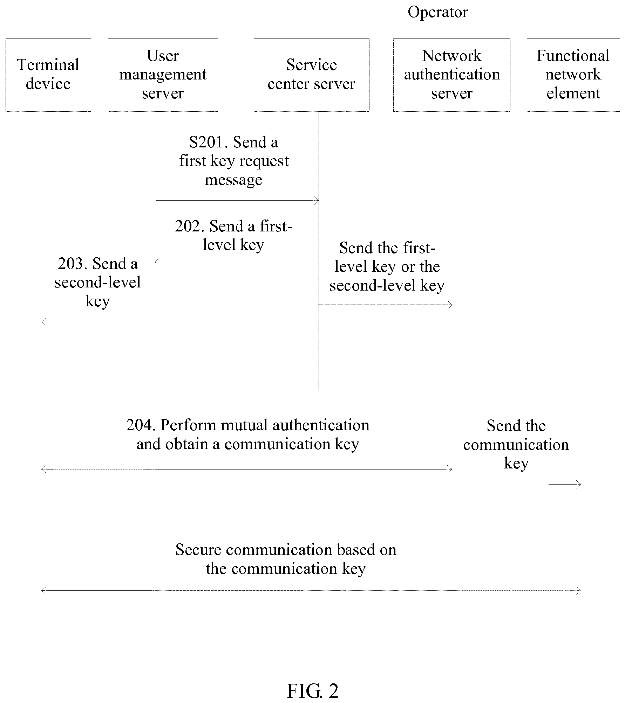

FIG. 2 is a signaling flowchart of Embodiment 1 of a key distribution and authentication method according to the present invention. As shown in FIG. 2, the method includes the following steps. S201. A user management server sends a first key request message to a service center server. The first key request message is used to instruct the service center server to generate a first-level key of the user management server, where the first key request message includes a user identifier of the user management server.

Specifically, before step 201, the user management server and the service center server have performed mutual authentication and the mutual authentication succeeds, and a secure communication channel is established. For example, the authentication may be performed in a manner such as a user name password, a certificate, a symmetric key, the AKA protocol, or the like.

S202. The service center server receives the first key request message sent by the user management server, generates a first-level key of the user management server, and sends the first-level key to the user management server.

Specifically, when receiving the first key request message sent by the user management server, the service center server generates the first-level key and sends the first-level key to the user management server, so that the user management server generates a second-level key of a terminal device based on the first-level key. For example, first key request messages sent by different user management servers to the service center server include user identifiers of the user management servers, and the service center server generates one first-level key for a user management server indicated by a user identifier included in each first key request message. For example, that the service center server generates the first-level key of the user management server includes the following feasible implementations.

In a first feasible implementation, a key generation process based on a symmetric key technology includes:
the service center server generates the first-level key of the user management server based on a third parameter set by using a key derivation function; or
the service center server determines a service random number and uses the service random number as the first-level key of the user management server; or
when the first key request message further includes at least one of a network identifier of the user management server and a service parameter, the service center server generates the first-level key of the user management server based on a fourth parameter set by using a key derivation function.

The third parameter set includes at least one of a key random number of the first-level key, a fresh parameter of the first-level key, a time parameter of the first-level key, and a shared key, and the shared key is a key shared by the user management server and the service center server. The fourth parameter set includes at least one of the user identifier of the user management server, the network identifier of the user management server, the service parameter, the key random number of the first-level key, the fresh parameter of the first-level key, the time parameter of the first-level key, and the shared key, and the shared key is a key shared by the user management server and the service center server.

In the first feasible implementation, the service center server sends the first-level key to the user management server, and the user management server generates the second-level key based on the first-level key and sends the second-level key to the terminal device.

To enable the terminal device and the network authentication server to perform mutual authentication based on the symmetric key technology, the service center server may send the first-level key to the network authentication server, so that the network authentication server generates, based on the first-level key, a second-level key that is the same as the second-level key of the terminal device.

Specifically, the service center server receives a second key request message sent by the network authentication server, where the second key request message includes the user identifier of the user management server; and the service center server retrieves or generates the first-level key based on the user identifier of the user management server in the second key request message, and sends the first-level key to the network authentication server, so that the network authentication server generates the second-level key of the terminal device based on the first-level key, and performs mutual authentication with the terminal device based on the second-level key.

The service center server may store the user identifier of the user management server and the first-level key in a corresponding manner. In this way, each time receiving a key request message including the user identifier, the service center server can regenerate, based on the user identifier, the first-level key of the user management server corresponding to the current user identifier. Alternatively, the service center server may first generate, based on the first-level key, a second-level key that is the same as the second-level key of the terminal device for the network authentication server, and sends the second-level key to the network authentication server. Specifically, the service center server receives a second key request message sent by the network authentication server, where the second key request message includes a first parameter set; and the service center server generates the second-level key of the terminal device based on the first-level key and the first parameter set by using the key derivation function, and sends the second-level key to the network authentication server, so that the network authentication server performs mutual authentication with the terminal device based on the second-level key.

The first parameter set includes parameters used when the user management server generates second-level keys for different terminal devices. To ensure that the second-level key of the terminal device and the second-level key of the network authentication server are the same, the first parameter set needs to be sent to the network authentication server or the service center server depending on a server generating the second-level key.

The first parameter set includes at least one of the user identifier of the user management server, the device identifier of the terminal device, the network identifier of the user management server, the service parameter, a key random number of the second-level key, a fresh parameter of the second-level key, and a time parameter of the second-level key.

After receiving the second-level key sent by the user management server, the terminal device may perform mutual authentication with the network authentication server based on the symmetric key technology. Because the second-level key is possessed by only the terminal device and the network authentication server, and is not disclosed, the terminal device and the network authentication server may encrypt and decrypt data based on the second-level key, thereby ensuring confidentiality of the authentication process.

In the first feasible implementation, the key derivation function (Key Derivation Function, KDF for short) is used to obtain a key through derivation based on an input parameter, and different keys are obtained when content, quantities, and sequences of input parameters are different. Specifically, an algorithm used by the KDF may be an HMAC algorithm (for example, HMAC-sha256), an OMAC algorithm, a CBC-MAC algorithm, a PMAC algorithm, a UMAC algorithm, a VMAC algorithm, or the like.

In the first feasible implementation, the key shared by the user management server and the service center server may be preset, or may be a key negotiated after a user and a key management center perform a protocol such as IPsec or TLS, or may be a key (for example, Kasme, a CK, and an IK) obtained after a user and a key management center perform AKA authentication and the authentication succeeds.

In a second feasible implementation, a key generation process based on identity-based cryptography or hierarchical identity-based cryptography includes:
the service center server generates the first-level key of the user management server based on the user identifier of the user management server by using a key generation algorithm in identity-based cryptography;
   or
the service center server generates the first-level key of the user management server based on the user identifier of the user management server and a fifth parameter set by using a key generation algorithm in identity-based cryptography.

The first-level key is a private key of the user management server, and the user identifier of the user management server is a public key of the user management server. Optionally, a public key generated based on the user identifier of the user management server may be selected as a public key of the user management server. In the following embodiments, that the user identifier of the user management server is used as the public key of the user management server is used as an example rather than a limitation. The fifth parameter set includes at least one of the following: a key random number of the first-level key, a fresh parameter of the first-level key, a time parameter of the first-level key.

In the second implementation, different private keys of user management servers and public keys of the user management servers that are corresponding to the private keys of the user management servers are generated for the different user management servers based on user identifiers of the different user management servers by using the key generation algorithm in the identity-based cryptography. When the user management server generates the second-level key for the terminal device based on the private key of the user management server, a private key of the terminal device and a public key of the terminal device are also obtained. In addition, the network authentication server also has a public key and a private key based on the identity-based cryptography. The public key is disclosed data, and the private key of the terminal device is possessed by only the terminal device and is not disclosed. When a device encrypts data by using the public key of the terminal device, and sends encrypted data to the terminal device, the terminal device may decrypt the encrypted data by using the private key of the terminal device, to obtain the data. Even if another device obtains the encrypted data, the another device cannot correctly decrypt or authenticate the encrypted data because the another device does not have the private key of the terminal device. Therefore, this kind of key based on the identity-based cryptography is applicable to a mutual authentication process based on an identity key technology. In a mutual authentication process, the public key and the private key based on the identity-based cryptography may be preset in the network authentication server.

In a third feasible implementation, a key generation process based on privacy-enhancing technologies includes:
the service center server generates a private key of the user management server and a public key of the user management server by using the privacy-enhancing technologies, where
the private key of the user management server is the first-level key of the user management server, and the service center server further sends the public key of the user management server to the user management server.

The privacy-enhancing technologies may be used to generate, based on user identifiers of different user management servers, different private keys for the different user management servers and public keys of the user management servers that are corresponding to the private keys of the user management servers. When the user management server generates a private key of the terminal device, namely the second-level key, for the terminal device based on the private key of the user management server, the terminal device may generate a digital signature based on the second-level key. A receiver can authenticate the digital signature of the terminal device by using only the public key of the user management server. Different from the second implementation, in the third implementation, the terminal device does not have the public key of the terminal device, and only have the public key of the user management server.

In any one of the foregoing feasible implementations, the fresh parameter (for example, a serial number or a nonce) of the first-level key is used to indicate freshness of the first-level key and prevent a replay attack. Fresh parameters of the first-level key at different moments should be different, and if fresh parameters of the first-level key at different moments are the same, it may be considered that a replay attack is carried out. The preset time parameter of the first-level key is used to indicate a validity period of the first-level key and includes at least one of a time point at which the first-level key becomes valid, a time point at which the first-level key becomes invalid, and a period during which the first-level key remains valid. A fresh parameter of any key in the following embodiments has the same meaning, and details are not described repeatedly. The user identifier of the user management server includes but is not limited to at least one of the following: an industry user ID, a company identifier ID, a service ID, and an individual user ID (for example, an IMEI, an IMSI, an IMPI, a TMSI, an IMPU, a user app ID, a MAC address, an IP address, a phone number, and a GUTI).

The network identifier includes but is not limited to at least one of the following: an operator ID (PLMN ID), an access network ID (Access Network ID), a serving network ID (Serving Network ID), a local area network ID, and another network ID.

The service parameter includes but is not limited to at least one of the following: a serial number SN in a service, a time stamp, a related ID in the service, a service fresh parameter, a service random number (nonce'/random number 1), a service class, and a delay parameter. The related ID in the service may be a service name, including at least one of an ID of a key management center, an ID of a service authentication center, an ID of a service center, a session ID, a link ID, an application ID, and a server ID. The time stamp may be a user's system time at which the request message is sent.

The device identifier of the terminal device includes but is not limited to at least one of the following: a device number, a serial number, an IMEI, an IMSI, an IMPI, a TMSI, an IMPU, a device app ID, a MAC address, an IP address, a phone number, and a GUTI. Optionally, the device identifier may also be another possible identifier that uniquely identifies the device.

In any one of the foregoing manners for generating the first-level key, different parameters are generally used to generate different first-level keys for different user management servers. For example, network identifiers of user management servers and service parameters may be added in a process of generating first-level keys, so as to generate first-level keys with different levels of complexity for different services of different user management servers. In other words, the service center server may set first-level keys with different levels of complexity for different user management servers. When different services of one user management server request keys from the service center server, the service center server may set a plurality of first-level keys for the user management server, so that the different services of the user management server are protected by using different keys.

S203. The user management server generates a second-level key of a terminal device based on the first-level key, and sends the second-level key to the terminal device.

Specifically, the user management server receives the first-level key sent by the service center server, generates the second-level key of the terminal device based on the first-level key, and sends the second-level key to the terminal device, so that the terminal device performs mutual authentication with the network authentication server based on the second-level key, to obtain a communication key for communication between the terminal device and a functional network element.

For example, when the user management server manages a plurality of terminal devices, the user management server generates different second-level keys for different terminal devices based on device identifiers of the terminal devices. Further, a parameter used for generating the second-level key may be added, so that the second-level keys can have higher confidentiality and have different secret levels. The user management server generates second-level keys for different terminal devices, so that load of the service center server in key generation can be greatly reduced.

Optionally, when the service center server sends the first-level key to the user management server and when the user management server sends the second-level key to the terminal device, time information of the keys is sent at the same time, so as to limit valid available time periods of the keys.

For example, that the user management server generates the second-level key of the terminal device includes the following feasible implementations.

In a first feasible implementation, a key generation process based on a symmetric key technology includes:
generating, by the user management server, the second-level key of the terminal device based on the first-level key and the first parameter set by using the key derivation function.

The method is applied to a case in which the first-level key is generated based on the symmetric key technology. Specifically, the user management server sends the second-level key and the first parameter set to the terminal device.

The first parameter set includes at least one of the user identifier of the user management server, the device identifier of the terminal device, the network identifier of the user management server, the service parameter, the key random number of the second-level key, the fresh parameter of the second-level key, and the time parameter of the second-level key.

In a second feasible implementation, a key generation process based on the identity key technology includes:
the user management server generates the second-level key of the terminal device and the public key of the terminal device based on the private key of the user management server and the first parameter set.

Specifically, the first-level key is the private key of the user management server, and the second-level key is the private key of the terminal device that is corresponding to the public key of the terminal device. The user management server further generates a first digital signature based on the first-level key, the public key of the terminal device, and the first parameter set, and sends the public key of the terminal device, the second-level key, the first digital signature, and a second parameter set to the terminal device. The public key of the terminal device may be the device identifier of the terminal device.

The method is applied to a case in which the first-level key is generated based on the identity key technology. The first parameter set includes at least one of the user identifier of the user management server, the device identifier of the terminal device, the network identifier of the user management server, the service parameter, the key random number of the second-level key, the fresh parameter of the second-level key, and the time parameter of the second-level key. The second parameter set includes at least one of the user identifier of the user management server, the device identifier of the terminal device, the network identifier of the user management server, and the service parameter.

In a third feasible implementation, a key generation process based on a hierarchical identity key technology includes:
the user management server generates the second-level key of the terminal device based on the first-level key and the device identifier of the terminal device by using a device identity-based generation algorithm.

Specifically, the first-level key is the private key of the user management server, and the second-level key is the private key of the terminal device. The user management server sends, to the terminal device, a second parameter set, the second-level key, and the public key of the terminal device that is corresponding to the private key of the terminal device. The public key of the terminal device may be the device identifier of the terminal device.

The method is applied to a case in which the first-level key is generated based on the identity key technology. The second parameter set includes at least one of the user identifier of the user management server, the device identifier of the terminal device, the network identifier of the user management server, and the service parameter.

In a fourth feasible implementation, a key generation process based on the privacy-enhancing technologies includes:
the user management server generates the second-level key of the terminal device based on the private key of the user management server by using a key generation algorithm in the privacy-enhancing technologies.

Specifically, the first-level key is the private key of the user management server, and the second-level key is the private key of the terminal device. The user management server sends the public key of the user management server, the second-level key, and a second parameter set to the terminal device. The public key of the user management server is a public key corresponding to the private key of the terminal device.

The method is applied to a case in which the first-level key is generated based on the privacy-enhancing technologies. The second parameter set includes at least one of the user identifier of the user management server, the device identifier of the terminal device, the network identifier of the user management server, and the service parameter.

S204. The terminal device performs mutual authentication with a network authentication server to obtain a communication key.

Specifically, the terminal device receives the second-level key sent by the user management server, and performs mutual authentication with the network authentication server to obtain the communication key for communication between the terminal device and the functional network element.

Optionally, after step 204, this embodiment of the present invention further includes:
the network authentication server sends the communication key to the functional network element, so that the terminal device and the functional network element can perform secure communication based on the communication key.

Optionally, in this embodiment of the present invention, after the communication key is generated, the network authentication server and the terminal device may generate a session key based on any one of the shared communication key, the second parameter set, a random number of the session key, a fresh parameter of the session key, and a preset time parameter of the session key by using the key derivation function, and send the session key to the functional network element, so as to use the session key instead of the communication key to implement secure communication between the functional network element and the terminal device.

Step 201 to step 203 mainly describe a key distribution method, and step 204 mainly describes a key authentication process.

Specifically, in step 204, based on different manners for generating the second-level key of the terminal device, mutual authentication between the terminal device and the network authentication server includes the following feasible implementations.

In a feasible implementation, the terminal device and the network authentication server perform mutual authentication based on the symmetric key technology.

In this feasible implementation, the service center server sends the first-level key of the user management server to the user management server, and the user management server generates the second-level key based on the first-level key; meanwhile, the network authentication server receives the first-level key or the second-level key sent by the service center server, and when the network authentication server receives the first-level key, the network authentication server generates the second-level key based on the first-level key, where a specific generation method is the same as a manner in which the user management server generates the second-level key, and details are not described; and finally, the network authentication server performs mutual authentication with the terminal device based on the second-level key.

For example, as shown in the dashed line in FIG. 2, the service center server may send the first-level key or the second-level key to the network authentication server when or after sending the first-level key to the user management server. Optionally, the service center server may send the first-level key or the second-level key to the network authentication server after receiving the second key request message sent by the network authentication server.

For example, in the process of mutual authentication between the network authentication server and the terminal device, the network authentication server may send the second key request message to the service center server after receiving an authentication request message sent by the terminal device, and the service center server sends the first-level key to the network authentication server after receiving the second key request message.

In another feasible implementation, the terminal device and the network authentication server perform mutual authentication based on an asymmetric key technology.

In this feasible implementation, the second-level key of the terminal device is the private key of the terminal device, and the device identifier of the terminal device is the public key of the terminal device. Optionally, a public key generated based on the device identifier of the terminal device may be selected as the public key of the terminal device. Details are not described in the following embodiments.

In this case, the network authentication server obtains the public key of the terminal device after receiving an authentication request message sent by the terminal device. To be specific, the network authentication server stores the public key of the terminal device, the public key of the network authentication server, and the private key of the network authentication server, and the terminal device stores the public key of the network authentication server. The network authentication server may encrypt to-be-transmitted data based on the public key of the terminal device, and the terminal device may encrypt to-be-transmitted data based on the public key of the network authentication server, so that the terminal device and the network authentication server can perform mutual authentication and obtain the communication key in a confidential situation.

For example, the public key and the private key of the network authentication server are generated based on the identity-based cryptography. The public key of the network authentication server may be an ID of the network authentication server, or a public key generated based on an ID of the network authentication server is used as the public key of the network authentication server.

For example, the public key of the network authentication server may be prestored in the terminal device. For example, the public key of the network authentication server may also be obtained before mutual authentication between the network authentication server and the terminal device. The network authentication server receives a public key request message or a certificate request message sent by the terminal device, and then the network authentication server sends the public key of the network authentication server or a certificate of the network authentication server to the terminal device. The certificate includes the public key of the network authentication server.

For example, the network authentication server may send the public key of the network authentication server to the terminal device in the mutual authentication process.

The network authentication server may also generate a third public key and a third private key of the network authentication server based on public key infrastructure (Public Key Infrastructure, PKI for short) cryptography, so as to replace the public key and the private key that are generated by the network authentication server based on the identity-based cryptography.

Optionally, the terminal device and the network authentication server may perform mutual authentication according to a protocol such as IPsec or TLS. Optionally, the terminal device and the network authentication server may directly use the second-level key as a key for secure communication between the terminal device and the functional network element.

In particular, this embodiment of the present invention is applicable to key distribution and authentication when an enterprise or a company simultaneously manages a plurality of terminal devices based on a plurality of services. According to this embodiment of the present invention, a plurality of terminal devices can obtain, in a case in which the terminal devices have not preset root keys or do not support a USIM card, different keys distributed by the service center server based on different services processed by the terminal devices, so that secure communication can be implemented. In addition, service-based key distribution and authentication led by an enterprise or a company are implemented, and operation complexity of the operator is reduced. In the key distribution and authentication method provided in this embodiment of the present invention, the service center server distributes different keys to user management servers, the user management servers distribute different keys to terminal devices, and the terminal devices perform mutual authentication with the network authentication server based on respective keys, and finally obtain communication keys for communication between the terminal devices and the functional network element. This embodiment of the present invention provides a method for establishing a secure communication channel for the terminal device, has a broad application range, and reduces operator network complexity.

The following describes in detail the mutual authentication process in step 204 by using specific embodiments. As described above, mutual authentication manners include at least an authentication manner based on the symmetric key technology and an authentication manner based on the asymmetric key technology.

In the authentication manner based on the symmetric key technology, the terminal device further receives the first parameter set sent by the user management server. Specifically, the mutual authentication process includes the following possible implementations.

First possible authentication implementation:

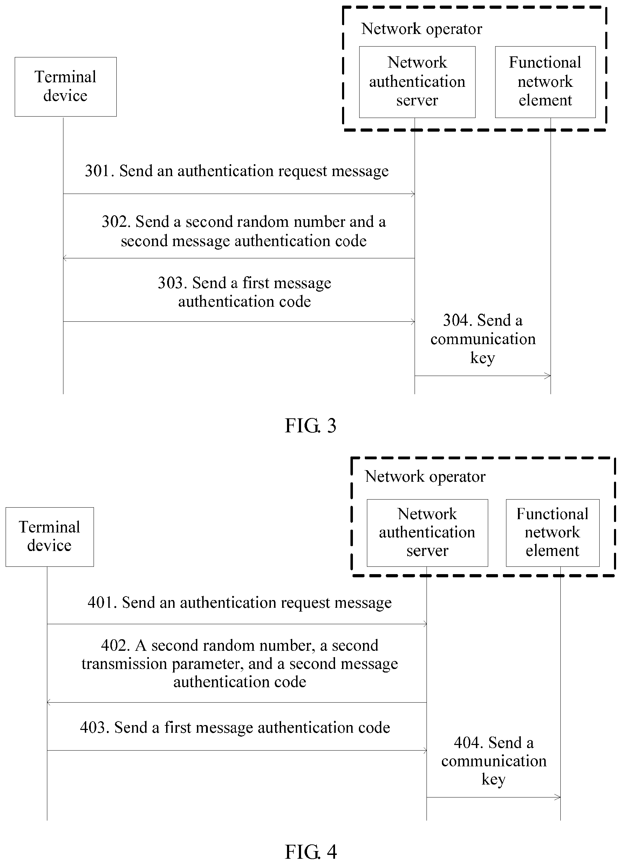

FIG. 3 is a signaling flowchart of Embodiment 1 of a key authentication method according to the present invention. As shown in FIG. 3, the method includes the following steps.

S301. The terminal device sends an authentication request message to the network authentication server.

Specifically, the terminal device determines a first random number, encrypts the first random number by using the second-level key, to obtain an encrypted first random number, and sends the authentication request message to the network authentication server, where the authentication request message includes the first parameter set and the encrypted first random number.

S302. The network authentication server sends an encrypted second random number and a second message authentication code to the terminal device.

Specifically, the network authentication server decrypts the encrypted first random number based on the second-level key to obtain the first random number; determines a second random number, and encrypts the second random number by using the second-level key, to obtain the encrypted second random number; generates a communication key K com of the network authentication server based on the second parameter set and at least one of the second-level key K dev, the first random number (nonce 1), and the second random number (nonce 2) by using the key derivation function, that is, K_com=KDF ((at least one of K_dev, nonce 1, and nonce 2), and the second parameter set); generates the second message authentication code MAC 2 based on the first random number (nonce 1), the second random number (nonce 2), the second parameter set, and either of the communication key K_corn and the second-level key K_dev, that is, MAC 2=MAC ((K_com or K_dev), nonce 1, nonce 2, and the second parameter set); and sends the encrypted second random number and the second message authentication code to the terminal device. S303. The terminal device sends a first message authentication code to the network authentication server.

Specifically, the terminal device receives the encrypted second random number and the second message authentication code that are sent by the network authentication server; decrypts the encrypted second random number based on the second-level key to obtain the second random number; after the second message authentication code has been authenticated, generates the communication key K com of the terminal device based on the second parameter set and at least one of the second-level key K dev, the first random number (nonce 1), and the second random number (nonce 2) by using the key derivation function KDF, that is, K_com=KDF ((at least one of K_dev, nonce 1, and nonce 2), and the second parameter set); generates the first message authentication code MAC 1 based on the first random number, the second random number, the second parameter set, and either of the communication key K_com and the second-level key K_dev, for example, MAC 1=MAC ((K_com or K_dev), and (at least one of nonce 1, nonce 2, and the second parameter set)); and sends the first message authentication code to the network authentication server.

S304. The network authentication server receives the first message authentication code sent by the terminal device, and sends the communication key to a functional network element after the network authentication server has authenticated the first message authentication code.

Optionally, in a process of implementing the foregoing authentication manner, the second parameter set is added in the processes of generating the communication key and the message authentication code, so as to improve confidentiality and increase relevance between the communication key and the terminal device. The second parameter set includes at least one of the user identifier of the user management server, the device identifier of the terminal device, the network identifier of the user management server, and the service parameter. Optionally, in a process of implementing the foregoing authentication manner, the second parameter set may be omitted in the processes of generating the communication key and the message authentication code, so as to simplify the communication key.

The first parameter set and the second parameter set in the embodiments of this application are the same, and therefore details are not described in the following.

Optionally, in the foregoing process of generating the communication key, a key parameter of the communication key may be used to replace the second parameter set. Alternatively, both the key parameter of the communication key and the second parameter set may be used. The key parameter of the communication key includes at least one of the following: a random number of the communication key, a fresh parameter of the communication key, and a preset time parameter of the communication key. Specifically, in the foregoing mutual authentication process, when the key parameter of the communication key is used in the process of generating the communication key by the network authentication server, the network authentication server needs to send the key parameter of the communication key to the terminal device; when the key parameter of the communication key is not used in the process of generating the communication key by the network authentication server, the network authentication server does not need to send the key parameter of the communication key to the terminal device.

Specifically, in the foregoing authentication process, the first message authentication code and the second message authentication code may be encrypted based on the second-level key, so as to improve confidentiality of the authentication process. Specifically, in the process of generating the communication key K com, if the second-level key shared by the terminal device and the network authentication server is used to generate K com, the first random number or the second random number may not be encrypted in the mutual authentication process. In the foregoing authentication process, the terminal device and the network authentication server use the same key derivation function and parameters to generate the communication key of the terminal device. In a process of generating a message authentication code, the terminal device and the network authentication server may use different parameters or parameters in different sequences to obtain different message authentication codes.

The same settings described above or similar settings may also be used in the following possible authentication manners, and details are not described in the following.

Optionally, the communication key in step S302 may be obtained by the network authentication server based on a third random number. When the communication key is obtained based on the third random number, the network authentication server encrypts the communication key by using the second-level key, and sends an encrypted communication key to the terminal device, so that the terminal device can obtain the communication key after decrypting the encrypted communication key. Optionally, the first random number and the second random number may not be encrypted in a process of randomly generating the communication key.

Second possible authentication implementation:
FIG. 4 is a signaling flowchart of Embodiment 2 of a key authentication method according to the present invention. As shown in FIG. 4, the method includes the following steps.

S401. The terminal device sends an authentication request message to the network authentication server.

Specifically, the terminal device determines a first random number and a first transmission parameter of a DH protocol. For example, the terminal device may first determine a first parameter x, and obtain the first transmission parameter g^{x} of the DH protocol based on the first parameter x. The first transmission parameter g^{x} is a generator g of the preset DH protocol raised to the power of the first parameter. Then the terminal device sends the authentication request message to the network authentication server. The authentication request message includes the first random number, the first transmission parameter, and the first parameter set.

The DH protocol in the embodiments of the present invention is the Diffie-Hellman protocol. S402. The network authentication server sends a second random number, a second transmission parameter, and a second message authentication code to the terminal device.

Specifically, the network authentication server receives the first random number, the first transmission parameter, and the first parameter set, and determines the second random number and the second transmission parameter of the DH protocol. For example, the network authentication server may first determine a second parameter y, and obtain the second transmission parameter g^{y} based on the second parameter y. The second transmission parameter g^{y} is a generator g of the preset DH protocol raised to the power of the second parameter. Then the network authentication server performs a DH key agreement algorithm based on the first transmission parameter g^{x} and the second transmission parameter g^{y} to obtain a third transmission parameter g^{xy}; generates the communication key of the network authentication server based on the third transmission parameter and at least one of the first random number, the second random number, and the second parameter set by using the key derivation function; generates the second message authentication code based on the first transmission parameter, the second transmission parameter, the second parameter set, and either of the communication key and the second-level key; and sends the second random number and the second message authentication code to the terminal device.

S403. The terminal device sends a first message authentication code to the network authentication server.

Specifically, the terminal device receives the second random number, the second transmission parameter, and the second message authentication code that are sent by the network authentication server; performs the DH key agreement algorithm based on the first transmission parameter and the second transmission parameter to obtain the third transmission parameter; after the second message authentication code has been authenticated, generates the communication key of the terminal device based on the third transmission parameter and at least one of the first random number, the second random number, and the second parameter set by using the key derivation function; generates the first message authentication code based on the first random number, the second random number, the second parameter set, and either of the communication key and the second-level key by using a message authentication code generation function; and sends the first message authentication code to the network authentication server. S404. The network authentication server receives the first message authentication code sent by the terminal device, and sends the communication key to a functional network element after the network authentication server has authenticated the first message authentication code. Optionally, in the mutual authentication process, the first random number and the second random number may be encrypted for transmission. Optionally, in the mutual authentication process, at least one of the first transmission parameter and the second transmission parameter may be encrypted.

Optionally, when there are a plurality of preset DH protocols and groups, the authentication request message in step 401 further includes a DH protocol identifier and/or a DH group identifier of a preset DH protocol selected by the terminal device. The network authentication server determines a to-be-used DH protocol based on the received DH protocol identifier, and determines, based on the DH group identifier, a group such as a generator g of the preset DH protocol used during transmission parameter generation.

Compared with the first possible authentication implementation, in the second possible authentication implementation, the first transmission parameter and the second transmission parameter are added, to improve key agreement confidentiality in the authentication process. Third possible authentication implementation:

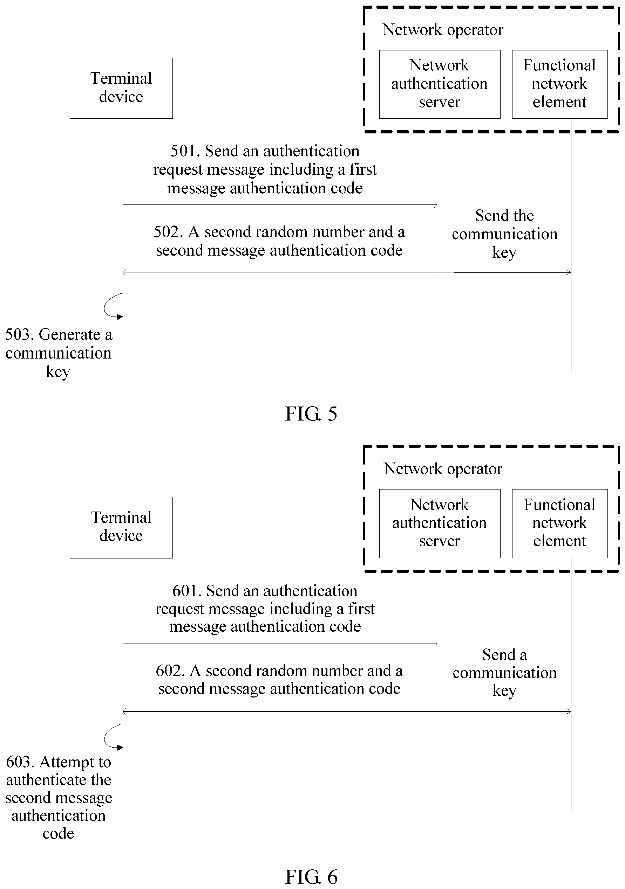

FIG. 5 is a signaling flowchart of Embodiment 3 of a key authentication method according to the present invention. As shown in FIG. 5, the method includes the following steps.

S501. The terminal device sends an authentication request message to the network authentication server.

Specifically, the terminal device determines a first random number; encrypts the first random number by using the second-level key, to obtain an encrypted first random number; generates a first message authentication code based on the second-level key and at least one of the second parameter set and the first random number by using a message authentication code generation function; and sends the authentication request message to the network authentication server, where the authentication request message includes the first message authentication code, the encrypted first random number, and the first parameter set.

S502. The network authentication server sends an encrypted second random number and a second message authentication code to the terminal device.

Specifically, the network authentication server decrypts the encrypted first random number based on the second-level key to obtain the first random number; determines a second random number, and encrypts the second random number by using the second-level key, to obtain the encrypted second random number; after the first message authentication code has been authenticated, generates the communication key of the network authentication server based on the second parameter set and at least one of the second-level key, the first random number, and the second random number by using the key derivation function; generates the second message authentication code based on either of the communication key and the second-level key and at least one of the first random number, the second random number, and the second parameter set; and sends the encrypted second random number and the second message authentication code to the terminal device, and sends the communication key to the functional network element.

S503. The terminal device generates the communication key.

Specifically, the terminal device receives the second message authentication code and the encrypted second random number that are sent by the network authentication server; decrypts the encrypted second random number based on the second-level key to obtain the second random number; and after the second message authentication code has been authenticated, generates the communication key of the terminal device based on the second parameter set and at least one of the second-level key, the first random number, and the second random number by using the key derivation function.

Optionally, the first random number and the second random number may not be encrypted in a process of generating the communication key based on the second-level key. Optionally, the communication key in step S502 may be obtained by the network authentication server based on a third random number. When the communication key is obtained based on the third random number, the network authentication server encrypts the communication key by using the second-level key, and sends an encrypted communication key to the terminal device, so that the terminal device can obtain the communication key after decrypting the encrypted communication key. Optionally, the first random number and the second random number may not be encrypted in a process of randomly generating the communication key.

Compared with the first and the second possible authentication implementations, in this authentication implementation, a quantity of times of signaling interaction is reduced, and authentication efficiency is improved.

Fourth possible authentication implementation:
FIG. 6 is a signaling flowchart of Embodiment 4 of a key authentication method according to the present invention. As shown in FIG. 6, the method includes the following steps.

S601. The terminal device sends an authentication request message to the network authentication server.

Specifically, the terminal device determines a first random number; encrypts the first random number by using the second-level key, to obtain an encrypted first random number; generates the communication key of the terminal device based on the second parameter set and at least one of the second-level key and the first random number by using the key derivation function; generates a first message authentication code based on either of the second-level key and the communication key and at least one of the second parameter set and the first random number by using a message authentication code generation function; and sends the authentication request message to the network authentication server, where the authentication request message includes the first message authentication code, the encrypted first random number, and the first parameter set.

S602. The network authentication server sends an encrypted second random number and a second message authentication code to the terminal device.

Specifically, the network authentication server decrypts the encrypted first random number based on the second-level key to obtain the first random number; determines a second random number, and encrypts the second random number by using the second-level key, to obtain the encrypted second random number; after the network authentication server has authenticated the first message authentication code, generates the communication key of the terminal device based on the second parameter set and at least one of the second-level key and the first random number by using the key derivation function; generates the second message authentication code based on either of the communication key and the second-level key and at least one of the first random number, the second random number, and the second parameter set; and sends the encrypted second random number and the second message authentication code to the terminal device, and sends the communication key to the functional network element.

S603. The terminal device attempts to authenticate the second message authentication code.

Specifically, the terminal device receives the encrypted second random number and the second message authentication code that are sent by the network authentication server, decrypts the encrypted second random number based on the second-level key to obtain the second random number, and attempts to authenticate the second message authentication code and determines that the authentication succeeds.

Compared with the first and the second possible authentication implementations, in this authentication implementation, a quantity of times of signaling interaction is reduced, and authentication efficiency is improved.

Compared with the third possible authentication implementation, in this authentication implementation, the terminal device first generates the communication key based on the first random number, and does not rely on the second random number sent by the network authentication server. Optionally, the first random number and the second random number may not be encrypted in a process of generating the communication key based on the second-level key.

Fifth possible authentication implementation:

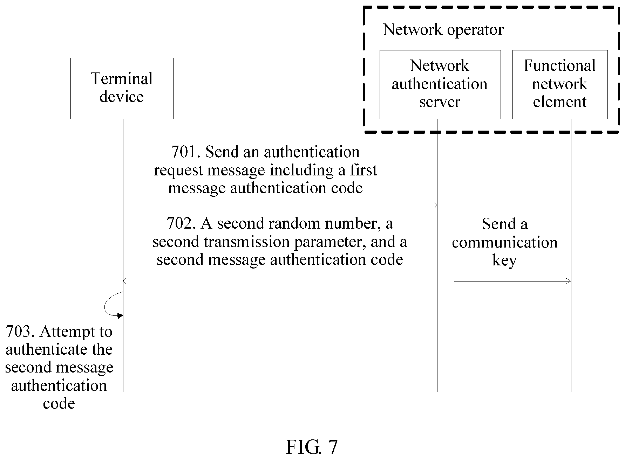

FIG. 7 is a signaling flowchart of Embodiment 5 of a key authentication method according to the present invention. As shown in FIG. 7, the method includes the following steps.

S701. The terminal device sends an authentication request message to the network authentication server.

Specifically, the terminal device determines a first random number and a first transmission parameter of a DH protocol; generates a first message authentication code based on the first key and the first random number by using a message authentication code generation function; and sends the authentication request message to the network authentication server, where the authentication request message includes the first message authentication code, the first random number, the first transmission parameter, and the device identifier of the terminal device.

S702. The network authentication server sends a second random number, a second transmission parameter, and a second message authentication code to the terminal device.

Specifically, the network authentication server determines the second random number and the second transmission parameter of the DH protocol; performs a DH key agreement algorithm based on the first transmission parameter and the second transmission parameter to obtain a third transmission parameter; after the network authentication server has authenticated the first message authentication code, generates the communication key of the network authentication server based on the third transmission parameter and at least one of the first random number, the second random number, and the second parameter set by using the key derivation function; generates the second message authentication code based on either of the communication key and the second-level key and any one of the first random number, the second random number, the first transmission parameter, the second transmission parameter, and the second parameter set; and sends the second random number and the second message authentication code to the terminal device, and sends the communication key to the functional network element.

S703. The terminal device attempts to authenticate the second message authentication code. Specifically, the terminal device receives the second random number, the second transmission parameter, and the second message authentication code that are sent by the network authentication server; performs the DH key agreement algorithm based on the first transmission parameter and the second transmission parameter to obtain the third transmission parameter; generates the communication key of the terminal device based on the third transmission parameter and at least one of the first random number and the second random number by using the key derivation function; and attempts to authenticate the second message authentication code and determines that the authentication succeeds.

Compared with the first and the second possible authentication implementations, in this authentication implementation, a quantity of times of signaling interaction is reduced, and authentication efficiency is improved.

Optionally, in the mutual authentication process, the first random number, the second random number, the first transmission parameter, and the second transmission parameter may also be encrypted for transmission, so as to improve confidentiality.

Optionally, when there are a plurality of preset DH protocols and groups, the authentication request message in step 701 further includes a DH protocol identifier and/or a DH group identifier of a preset DH protocol selected by the terminal device. The network authentication server determines a to-be-used DH protocol based on the received DH protocol identifier, and determines, based on the DH group identifier, a group such as a generator g of the preset DH protocol used during transmission parameter generation.

Compared with the first possible authentication implementation, in this possible authentication implementation, the first transmission parameter and the second transmission parameter are added, to improve confidentiality in the authentication process.

An authentication manner based on the identity key technology includes the following possible implementations.

Sixth possible authentication implementation:

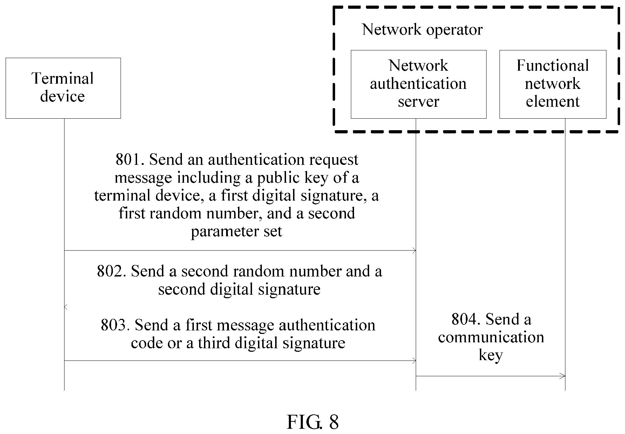

FIG. 8 is a signaling flowchart of Embodiment 6 of a key authentication method according to the present invention. As shown in FIG. 8, the method includes the following steps.

S801. The terminal device sends an authentication request message to the network authentication server, where the authentication request message includes a public key of the terminal device, a first digital signature, a first random number, and a second parameter set.

Specifically, the terminal device determines the first random number, encrypts the first random number by using the public key of the network authentication server, to obtain an encrypted first random number, and sends the authentication request message to the network authentication server, where the authentication request message includes the public key of the terminal device, the first digital signature, the encrypted first random number, and the second parameter set. S802. The network authentication server sends an encrypted second random number and a second digital signature to the terminal device.

Specifically, the network authentication server decrypts the encrypted first random number based on the private key of the network authentication server to obtain the first random number; determines a second random number, and encrypts the second random number by using the public key of the terminal device, to obtain the encrypted second random number; after the first digital signature has been authenticated, generates the communication key of the network authentication server based on the second parameter set and at least one of the first random number and the second random number by using the key derivation function; generates the second digital signature based on the private key of the network authentication server, the first random number, the second random number, and the second parameter set; and sends the second digital signature and the encrypted second random number to the terminal device.

S803. The terminal device sends a first message authentication code or a third digital signature to the network authentication server.

Specifically, the terminal device receives the encrypted second random number and the second digital signature that are sent by the network authentication server; decrypts the encrypted second random number based on the second-level key of the terminal device to obtain the second random number; after the second digital signature has been authenticated, generates the communication key of the terminal device based on the second parameter set and at least one of the first random number and the second random number by using the key derivation function; generates the first message authentication code based on the communication key, the first random number, the second random number, and the second parameter set, or generates the third digital signature based on the second-level key, the first random number, the second random number, and the second parameter set; and sends the first message authentication code or the third digital signature to the network authentication server.

S804. The network authentication server receives the first message authentication code or the third digital signature sent by the terminal device, and sends the communication key to a functional network element after the network authentication server has authenticated the first message authentication code or the third digital signature.

The terminal device receives the public key of the terminal device, the first digital signature, and the second parameter set that are sent by the user management server.

Specifically, in the foregoing authentication process, the first digital signature, the second digital signature, and the third digital signature may be encrypted, so as to improve confidentiality of the authentication process.

Optionally, the communication key in step S802 may be obtained by the network authentication server based on a third random number. When the communication key is obtained based on the third random number, the network authentication server encrypts the communication key by using the public key of the terminal device, and sends an encrypted communication key to the terminal device, so that the terminal device can obtain the communication key after decrypting the encrypted communication key based on the private key of the terminal device, namely the second-level key. Optionally, the first random number and the second random number may not be encrypted in a process of randomly generating the communication key.

Seventh possible authentication implementation:

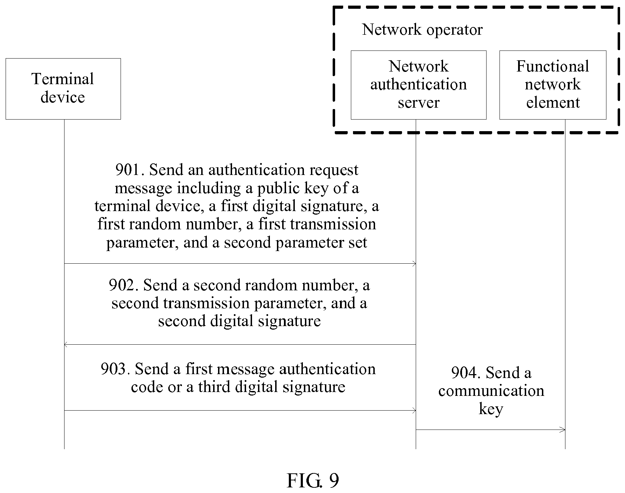

FIG. 9 is a signaling flowchart of Embodiment 7 of a key authentication method according to the present invention. As shown in FIG. 9, the method includes the following steps.

S901. The terminal device sends an authentication request message to the network authentication server, where the authentication request message includes a public key of the terminal device, a first digital signature, a first random number, a first transmission parameter, and a second parameter set.

Specifically, the terminal device determines the first random number and the first transmission parameter of a DH protocol, and sends the authentication request message to the network authentication server, where the authentication request message includes the public key of the terminal device, the first digital signature, the first random number, the first transmission parameter, and the second parameter set.

S902. The network authentication server sends a second random number, a second transmission parameter, and a second digital signature to the terminal device.

Specifically, the network authentication server determines the second random number and the second transmission parameter of the DH protocol; performs a DH key agreement algorithm based on the first transmission parameter and the second transmission parameter to obtain a third transmission parameter; after the first digital signature has been authenticated, generates the communication key of the network authentication server based on the third transmission parameter and at least one of the first random number, the second random number, and the second parameter set by using the key derivation function; generates the second digital signature based on the private key of the network authentication server, the first transmission parameter, the second transmission parameter, and at least one of the first random number, the second random number, and the second parameter set; and sends the second random number, the second transmission parameter, and the second digital signature to the terminal device.

S903. The terminal device sends a first message authentication code or a third digital signature to the network authentication server.

Specifically, the terminal device receives the second transmission parameter, the second random number, and the second digital signature that are sent by the network authentication server; performs the DH key agreement algorithm based on the first transmission parameter and the second transmission parameter to obtain the third transmission parameter; after the second digital signature has been authenticated, generates the communication key of the terminal device based on the third transmission parameter and at least one of the first random number, the second random number, and the second parameter set by using the key derivation function; generates the first message authentication code based on the communication key, the first transmission parameter, the second transmission parameter, and at least one of the first random number, the second random number, and the second parameter set by using a message authentication code generation function, or generates the third digital signature based on the second-level key, the first transmission parameter, the second transmission parameter, and at least one of the first random number, the second random number, and the second parameter set; and sends the first message authentication code or the third digital signature to the network authentication server. S904. The network authentication server receives the first message authentication code or the third digital signature sent by the terminal device, and sends the communication key to a functional network element after the network authentication server has authenticated the first message authentication code or the third digital signature.

Eighth possible authentication implementation:

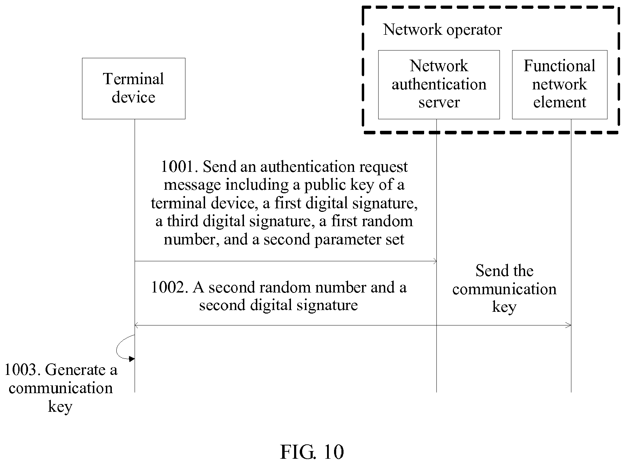

FIG. 10 is a signaling flowchart of Embodiment 8 of a key authentication method according to the present invention. As shown in FIG. 10, the method includes the following steps.

S1001. The terminal device sends an authentication request message to the network authentication server, where the authentication request message includes a public key of the terminal device, a first digital signature, a third digital signature, a first random number, and a second parameter set.

Specifically, the terminal device determines the first random number, and encrypts the first random number by using the public key of the network authentication server, to obtain an encrypted first random number; generates the third digital signature based on the second-level key, the first random number, and the second parameter set; and sends the authentication request message to the network authentication server, where the authentication request message includes the public key of the terminal device, the first digital signature, the third digital signature, the encrypted first random number, and the second parameter set.

S1002. The network authentication server sends an encrypted second random number and a second digital signature to the terminal device.

Specifically, the network authentication server decrypts the encrypted first random number based on the private key of the network authentication server to obtain the first random number; determines a second random number, and encrypts the second random number by using the public key of the terminal device, to obtain the encrypted second random number; after the first digital signature and the third digital signature have been authenticated, generates the communication key of the network authentication server based on the second parameter set and at least one of the first random number and the second random number by using the key derivation function; generates the second digital signature based on the private key of the network authentication server, the first random number, the second random number, and the second parameter set; and sends the second digital signature and the encrypted second random number to the terminal device, and sends the communication key to the functional network element.

S1003. The terminal device generates the communication key.

Specifically, the terminal device receives the second digital signature and the encrypted second random number that are sent by the network authentication server; decrypts the encrypted second random number based on the second-level key of the terminal device to obtain the second random number; and after the second digital signature has been authenticated, generates the communication key of the terminal device based on the second parameter set and at least one of the first random number and the second random number by using the key derivation function. Optionally, the communication key in step S1002 may be obtained by the network authentication server based on a third random number. When the communication key is obtained based on the third random number, the network authentication server encrypts the communication key by using the public key of the terminal device, and sends an encrypted communication key to the terminal device, so that the terminal device can obtain the communication key after decrypting the encrypted communication key based on the private key of the terminal device, namely the second-level key. Optionally, the first random number and the second random number may not be encrypted in a process of randomly generating the communication key.

Compared with the sixth and the seventh possible authentication implementations, in this authentication implementation, a quantity of times of signaling interaction is reduced, and authentication efficiency is improved.

An authentication manner based on the hierarchical identity key technology includes the following possible implementations:
Ninth possible authentication implementation:

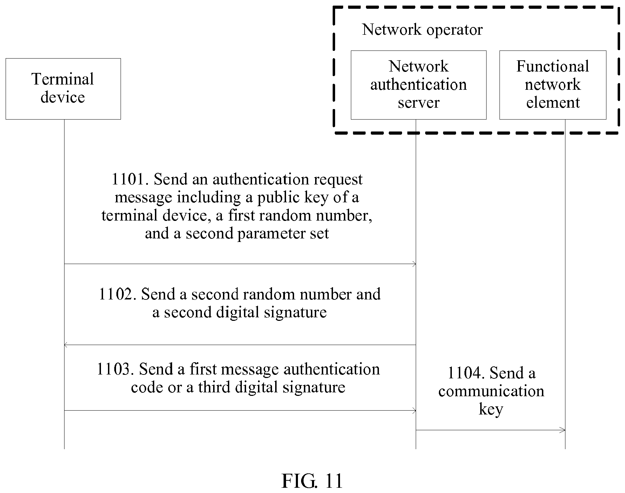

FIG. 11 is a signaling flowchart of Embodiment 9 of a key authentication method according to the present invention. As shown in FIG. 11, the method includes the following steps.

S1101. The terminal device sends an authentication request message to the network authentication server, where the authentication request message includes a public key of the terminal device, a first random number, and a second parameter set.

Specifically, the terminal device determines the first random number, encrypts the first random number by using the public key of the network authentication server, to obtain an encrypted first random number, and sends the authentication request message to the network authentication server, where the authentication request message includes the public key of the terminal device, the encrypted first random number, and the second parameter set.

S1102. The network authentication server sends an encrypted second random number and a second digital signature to the terminal device.

Specifically, the network authentication server decrypts the encrypted first random number based on the private key of the network authentication server to obtain the first random number; determines a second random number, and encrypts the second random number by using the public key of the terminal device, to obtain the encrypted second random number; generates the communication key of the network authentication server based on the second parameter set and at least one of the first random number and the second random number by using the key derivation function; generates the second digital signature based on the private key of the network authentication server, the first random number, the second random number, and the second parameter set; and sends the encrypted second random number and the second digital signature to the terminal device.

S1103. The terminal device sends a first message authentication code or a third digital signature to the network authentication server.

Specifically, the terminal device receives the encrypted second random number and the second digital signature that are sent by the network authentication server; decrypts the encrypted second random number based on the second-level key of the terminal device to obtain the second random number; after the second digital signature has been authenticated, generates the communication key of the terminal device based on the second parameter set and at least one of the first random number and the second random number by using the key derivation function; generates the first message authentication code based on the communication key, the first random number, the second random number, and the second parameter set, or generates the third digital signature based on the second-level key, the first random number, the second random number, and the second parameter set; and sends the first message authentication code or the third digital signature to the network authentication server.

S1104. The network authentication server receives the first message authentication code or the third digital signature sent by the terminal device, and sends the communication key to a functional network element after the network authentication server has authenticated the first message authentication code or the third digital signature.

Optionally, the communication key in step S1102 may be obtained by the network authentication server based on a third random number. When the communication key is obtained based on the third random number, the network authentication server encrypts the communication key by using the public key of the terminal device, and sends an encrypted communication key to the terminal device, so that the terminal device can obtain the communication key after decrypting the encrypted communication key based on the private key of the terminal device, namely the second-level key. Optionally, the first random number and the second random number may not be encrypted in a process of randomly generating the communication key.

Tenth possible authentication implementation:

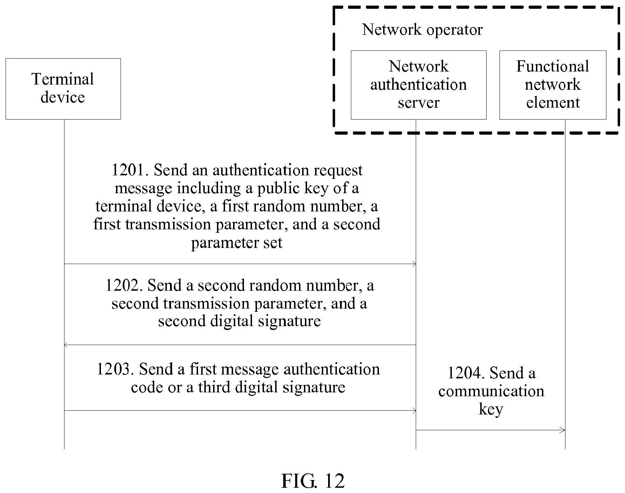

FIG. 12 is a signaling flowchart of Embodiment 10 of a key authentication method according to the present invention. As shown in FIG. 12, the method includes the following steps.

S1201. The terminal device sends an authentication request message to the network authentication server, where the authentication request message includes a public key of the terminal device, a first random number, a first transmission parameter, and a second parameter set.

Specifically, the terminal device determines the first random number and the first transmission parameter of a DH protocol, and sends the authentication request message to the network authentication server, where the authentication request message includes the public key of the terminal device, the first random number, the first transmission parameter, and the second parameter set.

S1202. The network authentication server sends a second random number, a second transmission parameter, and a second digital signature to the terminal device.

Specifically, the network authentication server determines the second random number and the second transmission parameter of the DH protocol; performs a DH key agreement algorithm based on the first transmission parameter and the second transmission parameter to obtain a third transmission parameter; generates the communication key of the network authentication server based on the third transmission parameter and at least one of the first random number, the second random number, and the second parameter set by using the key derivation function; generates the second digital signature based on the private key of the network authentication server, the first transmission parameter, the second transmission parameter, and at least one of the first random number, the second random number, and the second parameter set; and sends the second random number, the second transmission parameter, and the second digital signature to the terminal device.

S1203. The terminal device sends a first message authentication code or a third digital signature to the network authentication server.

Specifically, the terminal device receives the second transmission parameter, the second random number, and the second digital signature that are sent by the network authentication server; performs the DH key agreement algorithm based on the first transmission parameter and the second transmission parameter to obtain the third transmission parameter; after the second digital signature has been authenticated, generates the communication key of the terminal device based on the third transmission parameter and at least one of the first random number, the second random number, and the second parameter set by using the key derivation function; generates the first message authentication code based on the communication key, the first transmission parameter, the second transmission parameter, and at least one of the first random number, the second random number, and the second parameter set by using a message authentication code generation function, or generates the third digital signature based on the second-level key, the first transmission parameter, the second transmission parameter, and at least one of the first random number, the second random number, and the second parameter set; and sends the first message authentication code or the third digital signature to the network authentication server. S1204. The network authentication server receives the first message authentication code or the third digital signature sent by the terminal device, and sends the communication key to a functional network element after the network authentication server has authenticated the first message authentication code or the third digital signature.

Eleventh possible authentication implementation:

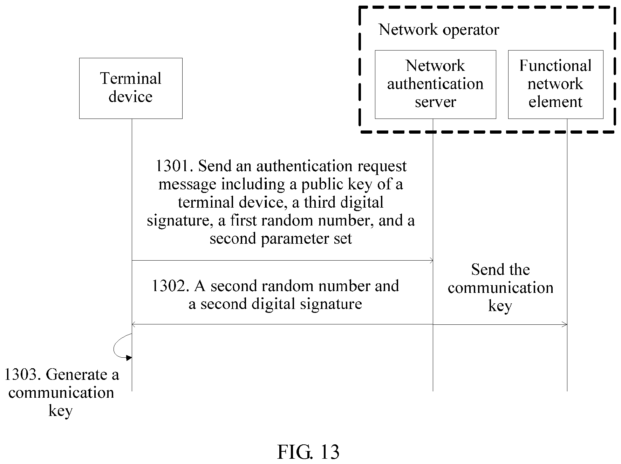

FIG. 13 is a signaling flowchart of Embodiment 11 of a key authentication method according to the present invention. As shown in FIG. 13, the method includes the following steps.

S1301. The terminal device sends an authentication request message to the network authentication server, where the authentication request message includes a public key of the terminal device, a third digital signature, a first random number, and a second parameter set. Specifically, the terminal device determines the first random number, and encrypts the first random number by using the public key of the network authentication server, to obtain an encrypted first random number; generates the third digital signature based on the second-level key, the first random number, and the second parameter set; and sends the authentication request message to the network authentication server, where the authentication request message includes the public key of the terminal device, the third digital signature, the encrypted first random number, and the second parameter set.

S1302. The network authentication server sends an encrypted second random number and a second digital signature to the terminal device.

Specifically, the network authentication server decrypts the encrypted first random number based on the private key of the network authentication server to obtain the first random number; determines a second random number, and encrypts the second random number by using the public key of the terminal device, to obtain the encrypted second random number; after the third digital signature has been authenticated, generates the communication key of the network authentication server based on the second parameter set and at least one of the first random number and the second random number by using the key derivation function; generates the second digital signature based on the private key of the network authentication server, the first random number, the second random number, and the second parameter set; and sends the second digital signature and the encrypted second random number to the terminal device, and sends the communication key to the functional network element.

S1303. The terminal device generates the communication key.

Specifically, the terminal device receives the second digital signature and the encrypted second random number that are sent by the network authentication server; decrypts the encrypted second random number based on the second-level key of the terminal device to obtain the second random number; and after the second digital signature has been authenticated, generates the communication key of the terminal device based on the second parameter set and at least one of the first random number and the second random number by using the key derivation function. Optionally, the communication key in step S1302 may be obtained by the network authentication server based on a third random number. When the communication key is obtained based on the third random number, the network authentication server encrypts the communication key by using the public key of the terminal device, and sends an encrypted communication key to the terminal device, so that the terminal device can obtain the communication key after decrypting the encrypted communication key based on the private key of the terminal device, namely the second-level key. Optionally, the first random number and the second random number may not be encrypted in a process of randomly generating the communication key. Optionally, if the communication key is generated by using only the first random number, the terminal device may perform, in step S1301, the action in step S1303 of generating the communication key. Compared with the ninth and the tenth possible authentication implementations, in this authentication implementation, a quantity of times of signaling interaction is reduced, and authentication efficiency is improved.

In an authentication manner based on a privacy-enhancing identity key technology, the public key of the user management server is a public key of the terminal device that is corresponding to the second-level key of the terminal device. The authentication manner includes the following possible implementations.

Twelfth possible authentication implementation:

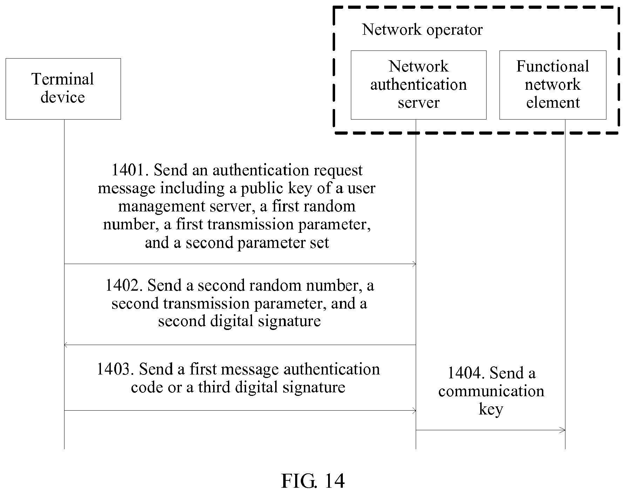

FIG. 14 is a signaling flowchart of Embodiment 12 of a key authentication method according to the present invention. As shown in FIG. 14, the method includes the following steps.

S1401. The terminal device sends an authentication request message to the network authentication server, where the authentication request message includes a public key of the user management server, a first random number, a first transmission parameter, and a second parameter set.

Specifically, the terminal device determines the first random number and the first transmission parameter of a DH protocol, and sends the authentication request message to the network authentication server, where the authentication request message includes the public key of the user management server, the first random number, the first transmission parameter, and the second parameter set.

51402. The network authentication server sends a second random number, a second transmission parameter, and a second digital signature to the terminal device.

Specifically, the network authentication server determines the second random number and the second transmission parameter of the DH protocol; performs a DH key agreement algorithm based on the first transmission parameter and the second transmission parameter to obtain a third transmission parameter; generates the communication key of the network authentication server based on the third transmission parameter and at least one of the first random number, the second random number, and the second parameter set by using the key derivation function; generates the second digital signature based on the private key of the network authentication server, the first transmission parameter, the second transmission parameter, and at least one of the first random number, the second random number, and the second parameter set; and sends the second random number, the second transmission parameter, and the second digital signature to the terminal device.

S1403. The terminal device sends a first message authentication code or a third digital signature to the network authentication server.

Specifically, the terminal device receives the second transmission parameter, the second random number, and the second digital signature that are sent by the network authentication server; performs the DH key agreement algorithm based on the first transmission parameter and the second transmission parameter to obtain the third transmission parameter; after the second digital signature has been authenticated, generates the communication key of the terminal device based on the third transmission parameter and at least one of the first random number, the second random number, and the second parameter set by using the key derivation function; generates the first message authentication code based on the communication key, the first transmission parameter, the second transmission parameter, and at least one of the first random number, the second random number, and the second parameter set by using a message authentication code generation function, or generates the third digital signature based on the second-level key, the first transmission parameter, the second transmission parameter, and at least one of the first random number, the second random number, and the second parameter set; and sends the first message authentication code or the third digital signature to the network authentication server. S1404. The network authentication server receives the first message authentication code or the third digital signature sent by the terminal device, and sends the communication key to a functional network element after the network authentication server has authenticated the first message authentication code or the third digital signature.

Thirteenth possible authentication implementation:

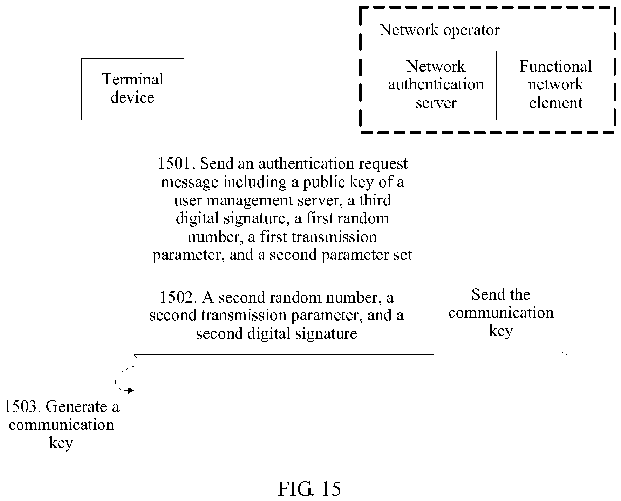

FIG. 15 is a signaling flowchart of Embodiment 13 of a key authentication method according to the present invention. As shown in FIG. 15, the method includes the following steps.

S1501. The terminal device sends an authentication request message to the network authentication server, where the authentication request message includes a public key of the user management server, a third digital signature, a first random number, a first transmission parameter, and a second parameter set.

Specifically, the terminal device determines the first random number and the first transmission parameter of a DH protocol, generates the third digital signature based on the second-level key, the first transmission parameter, and at least one of the first random number and the second parameter set, and sends the authentication request message to the network authentication server, where the authentication request message includes the public key of the user management server, the third digital key, the first random number, the first transmission parameter, and the second parameter set.

S1502. The network authentication server sends a second random number and a second digital signature to the terminal device.

Specifically, the network authentication server determines the second random number and the second transmission parameter of the DH protocol; performs a DH key agreement algorithm based on the first transmission parameter and the second transmission parameter to obtain a third transmission parameter; after the third digital signature has been authenticated, generates the communication key of the network authentication server based on the third transmission parameter and at least one of the first random number, the second random number, and the second parameter set by using the key derivation function; generates the second digital signature based on the private key of the network authentication server, the first transmission parameter, the second transmission parameter, and at least one of the first random number, the second random number, and the second parameter set; and sends the second random number, the second transmission parameter, and the second digital signature to the terminal device, and sends the communication key to the functional network element.

S1503. The terminal device generates the communication key.

Specifically, the terminal device receives the second transmission parameter, the second random number, and the second digital signature that are sent by the network authentication server; performs the DH key agreement algorithm based on the first transmission parameter and the second transmission parameter to obtain the third transmission parameter; and after the second digital signature has been authenticated, generates the communication key of the terminal device based on the third transmission parameter and at least one of the first random number, the second random number, and the second parameter set by using the key derivation function.

Optionally, in step 1502, the network authentication server may further generate a message authentication code based on the communication key after generating the communication key, and send the message authentication code to the terminal device. The terminal device may first generate the communication key, and then attempt to authenticate the received message authentication code. Optionally, if the communication key is generated by using only the first random number, the terminal device may perform, in step S1501, the action in step S1503 of generating the communication key.

Compared with the twelfth possible authentication implementation, in this authentication implementation, a quantity of times of signaling interaction is reduced, and authentication efficiency is improved.

Optionally, in the seventh, the tenth, the twelfth, and the thirteenth possible authentication implementations, when there are a plurality of preset DH protocols and groups, the authentication request message further includes a DH protocol identifier and/or a DH group identifier of a preset DH protocol selected by the terminal device. The network authentication server determines a to-be-used DH protocol based on the received DH protocol identifier, and determines, based on the DH group identifier, a group such as a generator g of the preset DH protocol used during transmission parameter generation.

In the foregoing authentication manner based on the asymmetric key technology, the network authentication server further receives a public key request message sent by the terminal device, and sends the public key of the network authentication server to the terminal device.

Another aspect of the embodiments of the present invention provides a service center server to execute the key distribution method in the foregoing embodiment. The service center server has the same technical features and technical effects as the key distribution method in the foregoing embodiment.

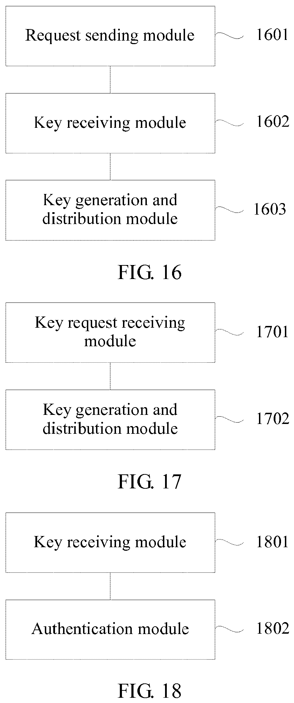

FIG. 16 is a schematic structural diagram of Embodiment 1 of a user management server according to the present invention. As shown in FIG. 16, the server includes:
a request sending module 1601, configured to send a first key request message to a service center server, where the first key request message is used to instruct the service center server to generate a first-level key of the user management server, and the first key request message includes a user identifier of the user management server;
a key receiving module 1602, configured to receive the first-level key of the user management server that is sent by the service center server; and
a key generation and distribution module 1603, configured to: generate a second-level key of a terminal device based on the first-level key, and send the second-level key to the terminal device, so that the terminal device performs mutual authentication with a network authentication server based on the second-level key, to obtain a communication key for communication between the terminal device and a functional network element.

Optionally, on the basis of the embodiment shown in FIG. 16, the key generation and distribution module 1603 is specifically configured to:
generate the second-level key of the terminal device based on the first-level key and a first parameter set by using a key derivation function; and send the second-level key and the first parameter set to the terminal device, so that the terminal device performs mutual authentication with the network authentication server based on the second-level key, to obtain the communication key for communication between the terminal device and the functional network element; where
the first parameter set includes at least one of the user identifier of the user management server, a device identifier of the terminal device, a network identifier of the user management server, a service parameter, a key random number of the second-level key, a fresh parameter of the second-level key, and a time parameter of the second-level key.

Optionally, on the basis of the embodiment shown in FIG. 16, the first-level key is a private key of the user management server, and the key generation and distribution module 1603 is specifically configured to:
generate the second-level key of the terminal device and a public key of the terminal device based on the private key of the user management server and a first parameter set, where the second-level key is a private key of the terminal device that is corresponding to the public key of the terminal device;
generate a first digital signature based on the first-level key, the public key of the terminal device, and the first parameter set; and
send the public key of the terminal device, the second-level key, the first digital signature, and a second parameter set to the terminal device, so that the terminal device performs mutual authentication with the network authentication server based on the second-level key, to obtain the communication key for communication between the terminal device and the functional network element; where
the first parameter set includes at least one of the user identifier of the user management server, a device identifier of the terminal device, a network identifier of the user management server, a service parameter, a key random number of the second-level key, a fresh parameter of the second-level key, and a time parameter of the second-level key; and
the second parameter set includes at least one of the user identifier of the user management server, the device identifier of the terminal device, the network identifier of the user management server, and the service parameter.

Optionally, on the basis of the embodiment shown in FIG. 16, the first-level key is a private key of the user management server, and the key generation and distribution module 1603 is specifically configured to:
generate the second-level key of the terminal device based on the private key of the user management server and a device identifier of the terminal device by using a device identity-based generation algorithm, where the second-level key is a private key of the terminal device; and
send, to the terminal device, a second parameter set, the second-level key, and a public key of the terminal device that is corresponding to the private key of the terminal device, so that the terminal device performs mutual authentication with the network authentication server based on the second-level key, to obtain the communication key for communication between the terminal device and the functional network element; where
the second parameter set includes at least one of the user identifier of the user management server, the device identifier of the terminal device, a network identifier of the user management server, and a service parameter.

Optionally, on the basis of the embodiment shown in FIG. 16, the first-level key is a private key of the user management server, the key receiving module is further configured to receive a public key of the user management server that is sent by the service center server, and the key generation and distribution module 1603 is specifically configured to:
generate the second-level key of the terminal device based on the private key of the user management server by using a privacy-enhancing technologies-based key generation algorithm, where the second-level key is a private key of the terminal device; and
send the public key of the user management server, the second-level key, and a second parameter set to the terminal device, so that the terminal device performs mutual authentication with the network authentication server based on the second-level key, to obtain the communication key for communication between the terminal device and the functional network element; where
the second parameter set includes at least one of the user identifier of the user management server, a device identifier of the terminal device, a network identifier of the user management server, and a service parameter.

Still another aspect of the embodiments of the present invention provides a service center server to execute the key distribution method in the foregoing embodiment. The service center server has the same technical features and technical effects as the key distribution method in the foregoing embodiment.

FIG. 17 is a schematic structural diagram of Embodiment 1 of the service center server according to the present invention. As shown in FIG. 17, the server includes:
a key request receiving module 1701, configured to receive a first key request message sent by a user management server, where the first key request message is used to instruct the service center server to generate a first-level key of the user management server, and the first key request message includes a user identifier of the user management server; and
a key generation and distribution module 1702, configured to: generate, based on the first key request message, the first-level key of the user management server corresponding to the user identifier, and send the first-level key to the user management server.

Optionally, on the basis of the embodiment shown in FIG. 17, the key generation and distribution module 1702 is specifically configured to:
generate the first-level key of the user management server based on a third parameter set by using a key derivation function, and send the first-level key to the user management server; where
the third parameter set includes at least one of a key random number of the first-level key, a fresh parameter of the first-level key, a time parameter of the first-level key, and a shared key, and the shared key is a key shared by the user management server and the service center server;
   or
determine a service random number, use the service random number as the first-level key of the user management server, and send the first-level key to the user management server. Optionally, on the basis of the embodiment shown in FIG. 17, the first key request message further includes at least one of a network identifier of the user management server and a service parameter, and the key generation and distribution module 1702 is specifically configured to:
generate the first-level key of the user management server based on a fourth parameter set by using a key derivation function, and send the first-level key to the user management server; where
the fourth parameter set includes at least one of the user identifier of the user management server, the network identifier of the user management server, the service parameter, a key random number of the first-level key, a fresh parameter of the first-level key, a time parameter of the first-level key, and a shared key, and the shared key is a key shared by the user management server and the service center server.

Optionally, on the basis of the embodiment shown in FIG. 17, the key generation and distribution module 1702 is specifically configured to:
generate the first-level key of the user management server based on the user identifier of the user management server by using a key generation algorithm in identity-based cryptography, and send the first-level key to the user management server, where the first-level key is a private key of the user management server.

Optionally, on the basis of the embodiment shown in FIG. 17, the key generation and distribution module 1702 is specifically configured to:
generate the first-level key of the user management server based on the user identifier of the user management server and a fifth parameter set by using a key generation algorithm in identity-based cryptography, and send the first-level key to the user management server, where the first-level key is a private key of the user management server, where
the fifth parameter set includes at least one of the following:
   a key random number of the first-level key, a fresh parameter of the first-level key, and a time parameter of the first-level key.

Optionally, on the basis of the embodiment shown in FIG. 17, the key generation and distribution module 1702 is specifically configured to:
generate a private key of the user management server and a public key of the user management server by using privacy-enhancing technologies, where the private key of the user management server is the first-level key of the user management server; and send the first-level key and the public key of the user management server to the user management server. Optionally, on the basis of the embodiment shown in FIG. 17, when a mutual authentication process is based on a symmetric key technology, the key request receiving module 1701 is further configured to receive a second key request message sent by the network authentication server, where the second key request message includes the user identifier of the user management server; and
the key generation and distribution module 1702 is further configured to: retrieve or generate the first-level key based on the user identifier of the user management server in the second key request message, and send the first-level key to the network authentication server, so that the network authentication server generates a second-level key of a terminal device based on the first-level key, and performs mutual authentication with the terminal device based on the second-level key.

Optionally, on the basis of the embodiment shown in FIG. 17, when a mutual authentication process is based on a symmetric key technology, the key request receiving module 1701 is further configured to receive a second key request message sent by the network authentication server, where the second key request message includes a first parameter set; and
the key generation and distribution module 1702 is further configured to: generate a second-level key of a terminal device based on the first-level key and the first parameter set by using the key derivation function, and send the second-level key to the network authentication server, so that the network authentication server performs mutual authentication with the terminal device based on the second-level key; where
the first parameter set includes at least one of the user identifier of the user management server, a device identifier of the terminal device, a network identifier of the user management server, the service parameter, a key random number of the second-level key, a fresh parameter of the second-level key, and a time parameter of the second-level key.

Still another aspect of the embodiments of the present invention provides a terminal device to execute the key authentication method in the foregoing embodiment. The terminal device has the same technical features and technical effects as the key authentication method in the foregoing embodiment.

FIG. 18 is a schematic structural diagram of Embodiment 1 of the terminal device according to the present invention. As shown in FIG. 18, the terminal device includes:
a key receiving module 1801, configured to receive a second-level key of the terminal device that is sent by a user management server; and
an authentication module 1802, configured to perform mutual authentication with a network authentication server based on the second-level key, to obtain a communication key for communication between the terminal device and a functional network element.

The following describes in detail the mutual authentication process performed by the authentication module 1802 by using specific embodiments. As described in the foregoing method embodiment, mutual authentication manners include at least an authentication manner based on a symmetric key technology and an authentication manner based on an identity key technology.

The authentication manner based on the symmetric key technology includes the following possible implementations.

In a first feasible authentication manner, the key receiving module 1801 is further configured to receive a first parameter set sent by the user management server; and the authentication module 1802 is specifically configured to:
determine a first random number, encrypt the first random number by using the second-level key, to obtain an encrypted first random number, and send an authentication request message to the network authentication server, where the authentication request message includes the first parameter set and the encrypted first random number;
receive an encrypted second random number and a second message authentication code that are sent by the network authentication server, and decrypt the encrypted second random number based on the second-level key to obtain a second random number, where the encrypted second random number is obtained after the network authentication server encrypts the second random number by using the second-level key; and
after the second message authentication code has been authenticated, generate the communication key of the terminal device based on a second parameter set and at least one of the second-level key, the first random number, and the second random number by using a key derivation function; generate a first message authentication code based on the first random number, the second random number, the second parameter set, and either of the communication key and the second-level key; and send the first message authentication code to the network authentication server, so that the network authentication server attempts to authenticate the first message authentication code; where
the first parameter set includes at least one of a user identifier of the user management server, a device identifier of the terminal device, a network identifier of the user management server, a service parameter, a key random number of the second-level key, a fresh parameter of the second-level key, and a time parameter of the second-level key; and
the second parameter set includes at least one of the user identifier of the user management server, the device identifier of the terminal device, the network identifier of the user management server, and the service parameter.

In a second feasible authentication manner, the key receiving module 1801 is further configured to receive a first parameter set sent by the user management server; and the authentication module 1802 is specifically configured to:
determine a first random number, and send an authentication request message to the network authentication server, where the authentication request message includes the first parameter set and the first random number;
receive a second random number and a second message authentication code that are sent by the network authentication server; and
after the second message authentication code has been authenticated, generate the communication key of the terminal device based on the second-level key and at least one of the first random number, the second random number, and a second parameter set by using a key derivation function; generate a first message authentication code based on the first random number, the second random number, the second parameter set, and either of the communication key and the second-level key; and send the first message authentication code to the network authentication server, so that the network authentication server attempts to authenticate the first message authentication code; where
the first parameter set includes at least one of a user identifier of the user management server, a device identifier of the terminal device, a network identifier of the user management server, a service parameter, a key random number of the second-level key, a fresh parameter of the second-level key, and a time parameter of the second-level key; and
the second parameter set includes at least one of the user identifier of the user management server, the device identifier of the terminal device, the network identifier of the user management server, and the service parameter.

In a third feasible authentication manner, the key receiving module 1801 is further configured to receive a first parameter set sent by the user management server; and the authentication module 1802 is specifically configured to:
determine a first random number, and send an authentication request message to the network authentication server, where the authentication request message includes the first parameter set and the first random number;
receive a second random number, a second message authentication code, and an encrypted communication key that are sent by the network authentication server, and decrypt the encrypted communication key based on the second-level key to obtain the communication key, where the encrypted communication key is obtained after the network authentication server encrypts the communication key by using the second-level key; and
after the second message authentication code has been authenticated, generate a first message authentication code based on the first random number, the second random number, the second parameter set, and either of the communication key and the second-level key; and send the first message authentication code to the network authentication server, so that the network authentication server attempts to authenticate the first message authentication code; where
the first parameter set includes at least one of a user identifier of the user management server, a device identifier of the terminal device, a network identifier of the user management server, a service parameter, a key random number of the second-level key, a fresh parameter of the second-level key, and a time parameter of the second-level key; and
the second parameter set includes at least one of the user identifier of the user management server, the device identifier of the terminal device, the network identifier of the user management server, and the service parameter.

In a fourth feasible authentication manner, the key receiving module 1801 is further configured to receive a first parameter set sent by the user management server; and the authentication module 1802 is specifically configured to:
determine a first random number and a first transmission parameter of a DH protocol, and send an authentication request message to the network authentication server, where the authentication request message includes the first random number, the first transmission parameter, and the first parameter set;
receive a second transmission parameter, a second random number, and a second message authentication code that are sent by the network authentication server, and perform a DH key agreement algorithm based on the first transmission parameter and the second transmission parameter to obtain a third transmission parameter; and
after the second message authentication code has been authenticated, generate the communication key of the terminal device based on the third transmission parameter and at least one of the first random number, the second random number, and a second parameter set by using a key derivation function; generate a first message authentication code based on the first random number, the second random number, the second parameter set, and either of the communication key and the second-level key by using a message authentication code generation function; and send the first message authentication code to the network authentication server, so that the network authentication server attempts to authenticate the first message authentication code; where
the first parameter set includes at least one of a user identifier of the user management server, a device identifier of the terminal device, a network identifier of the user management server, a service parameter, a key random number of the second-level key, a fresh parameter of the second-level key, and a time parameter of the second-level key; and
the second parameter set includes at least one of the user identifier of the user management server, the device identifier of the terminal device, the network identifier of the user management server, and the service parameter.

In a fifth feasible authentication manner, the key receiving module 1801 is further configured to receive a first parameter set sent by the user management server; and the authentication module 1802 is specifically configured to:
determine a first random number; encrypt the first random number by using the second-level key, to obtain an encrypted first random number; generate a first message authentication code based on the second-level key and at least one of a second parameter set and the first random number by using a message authentication code generation function; and send an authentication request message to the network authentication server, where the authentication request message includes the first message authentication code, the encrypted first random number, and the first parameter set;
receive a second message authentication code and an encrypted second random number that are sent by the network authentication server, and decrypt the encrypted second random number based on the second-level key to obtain a second random number, where the encrypted second random number is obtained after the network authentication server encrypts the second random number by using the second-level key; and
after the second message authentication code has been authenticated, generate the communication key of the terminal device based on the second parameter set and at least one of the second-level key, the first random number, and the second random number by using a key derivation function; where
the first parameter set includes at least one of a user identifier of the user management server, a device identifier of the terminal device, a network identifier of the user management server, a service parameter, a key random number of the second-level key, a fresh parameter of the second-level key, and a time parameter of the second-level key; and
the second parameter set includes at least one of the user identifier of the user management server, the device identifier of the terminal device, the network identifier of the user management server, and the service parameter.

In a sixth feasible authentication manner, the key receiving module 1801 is further configured to receive a first parameter set sent by the user management server; and the authentication module 1802 is specifically configured to:
determine a first random number; generate a first message authentication code based on the second-level key and at least one of a second parameter set and the first random number by using a message authentication code generation function; and send an authentication request message to the network authentication server, where the authentication request message includes the first message authentication code, the first random number, and the first parameter set;
receive a second random number and a second message authentication code that are sent by the network authentication server; and
after the second message authentication code has been authenticated, generate the communication key of the terminal device based on the second-level key and at least one of the first random number, the second random number, and the second parameter set by using a key derivation function; where
the first parameter set includes at least one of a user identifier of the user management server, a device identifier of the terminal device, a network identifier of the user management server, a service parameter, a key random number of the second-level key, a fresh parameter of the second-level key, and a time parameter of the second-level key; and
the second parameter set includes at least one of the user identifier of the user management server, the device identifier of the terminal device, the network identifier of the user management server, and the service parameter.

In a seventh feasible authentication manner, the key receiving module 1801 is further configured to receive a first parameter set sent by the user management server; and the authentication module 1802 is specifically configured to:
determine a first random number; generate a first message authentication code based on the second-level key and at least one of a second parameter set and the first random number by using a message authentication code generation function; and send an authentication request message to the network authentication server, where the authentication request message includes the first message authentication code, the first random number, and the first parameter set;
receive a second random number, a second message authentication code, and an encrypted communication key that are sent by the network authentication server; and
after the second message authentication code has been authenticated based on the second random number, decrypt the encrypted communication key based on the second-level key to obtain the communication key; where
the first parameter set includes at least one of a user identifier of the user management server, a device identifier of the terminal device, a network identifier of the user management server, a service parameter, a key random number of the second-level key, a fresh parameter of the second-level key, and a time parameter of the second-level key; and
the second parameter set includes at least one of the user identifier of the user management server, the device identifier of the terminal device, the network identifier of the user management server, and the service parameter.

In an eighth feasible authentication manner, the key receiving module 1801 is further configured to receive a first parameter set sent by the user management server; and the authentication module 1802 is specifically configured to:
determine a first random number; encrypt the first random number by using the second-level key, to obtain an encrypted first random number; generate the communication key of the terminal device based on a second parameter set and at least one of the second-level key and the first random number by using a key derivation function; generate a first message authentication code based on either of the second-level key and the communication key and at least one of the second parameter set and the first random number by using a message authentication code generation function; and send an authentication request message to the network authentication server, where the authentication request message includes the first message authentication code, the encrypted first random number, and the first parameter set; and
receive a second message authentication code and an encrypted second random number that are sent by the network authentication server; decrypt the encrypted second random number based on the second-level key to obtain a second random number, where the encrypted second random number is obtained after the network authentication server encrypts the second random number by using the second-level key; and attempt to authenticate the second message authentication code based on the second random number and determine that the authentication succeeds; where
the first parameter set includes at least one of a user identifier of the user management server, a device identifier of the terminal device, a network identifier of the user management server, a service parameter, a key random number of the second-level key, a fresh parameter of the second-level key, and a time parameter of the second-level key; and
the second parameter set includes at least one of the user identifier of the user management server, the device identifier of the terminal device, the network identifier of the user management server, and the service parameter.

In a ninth feasible authentication manner, the key receiving module 1801 is further configured to receive a first parameter set sent by the user management server; and the authentication module 1802 is specifically configured to:
determine a first random number; generate the communication key of the terminal device based on the second-level key and at least one of the first random number and a second parameter set by using a key derivation function; generate a first message authentication code based on either of the second-level key and the communication key and at least one of the second parameter set and the first random number by using a message authentication code generation function; and send an authentication request message to the network authentication server, where the authentication request message includes the first message authentication code, the first random number, and the first parameter set; and
receive a second random number and a second message authentication code that are sent by the network authentication server, and attempt to authenticate the second message authentication code and determine that the authentication succeeds; where
the first parameter set includes at least one of a user identifier of the user management server, a device identifier of the terminal device, a network identifier of the user management server, a service parameter, a key random number of the second-level key, a fresh parameter of the second-level key, and a time parameter of the second-level key; and
the second parameter set includes at least one of the user identifier of the user management server, the device identifier of the terminal device, the network identifier of the user management server, and the service parameter.

In a tenth feasible authentication manner, the key receiving module 1801 is further configured to receive a first parameter set sent by the user management server; and the authentication module 1802 is specifically configured to:
determine a first random number and a first transmission parameter of a DH protocol; generate a first message authentication code based on the second-level key, the first random number, and a second parameter set by using a message authentication code generation function; and send an authentication request message to the network authentication server, where the authentication request message includes the first random number, the first transmission parameter, the first message authentication code, and the first parameter set;
receive a second transmission parameter, a second random number, and a second message authentication code that are sent by the network authentication server, and perform a DH key agreement algorithm based on the first transmission parameter and the second transmission parameter to obtain a third transmission parameter; and
after the second message authentication code has been authenticated, generate the communication key of the terminal device based on the third transmission parameter and at least one of the first random number, the second random number, and the second parameter set by using a key derivation function; where
the first parameter set includes at least one of a user identifier of the user management server, a device identifier of the terminal device, a network identifier of the user management server, a service parameter, a key random number of the second-level key, a fresh parameter of the second-level key, and a time parameter of the second-level key; and
the second parameter set includes at least one of the user identifier of the user management server, the device identifier of the terminal device, the network identifier of the user management server, and the service parameter.

In the authentication manner based on the identity key technology, the second-level key is a private key of the terminal device, and a public key of the terminal device is corresponding to the second-level key. The authentication manner based on the identity key technology includes the following possible implementations.

In an eleventh feasible authentication manner, the key receiving module 1801 is further configured to receive the public key of the terminal device, a first digital signature, and a second parameter set that are sent by the user management server; and the authentication module 1802 is specifically configured to:
determine a first random number, encrypt the first random number by using a public key of the network authentication server, to obtain an encrypted first random number, and send an authentication request message to the network authentication server, where the authentication request message includes the public key of the terminal device, the first digital signature, the encrypted first random number, and the second parameter set;
receive an encrypted second random number and a second digital signature that are sent by the network authentication server, and decrypt the encrypted second random number based on the second-level key of the terminal device to obtain a second random number, where the encrypted second random number is obtained after the network authentication server encrypts the second random number by using the public key of the terminal device; and
after the second digital signature has been authenticated, generate the communication key of the terminal device based on the second parameter set and at least one of the first random number and the second random number by using a key derivation function; generate a first message authentication code based on the communication key, the first random number, the second random number, and the second parameter set, or generate a third digital signature based on the second-level key, the first random number, the second random number, and the second parameter set; and send the first message authentication code or the third digital signature to the network authentication server, so that the network authentication server attempts to authenticate the first message authentication code or the third digital signature; where
the second parameter set includes at least one of a user identifier of the user management server, a device identifier of the terminal device, a network identifier of the user management server, and a service parameter.

In a twelfth feasible authentication manner, the key receiving module 1801 is further configured to receive the public key of the terminal device and a second parameter set that are sent by the user management server; and the authentication module 1802 is specifically configured to:
determine a first random number, encrypt the first random number by using a public key of the network authentication server, to obtain an encrypted first random number, and send an authentication request message to the network authentication server, where the authentication request message includes the public key of the terminal device, the encrypted first random number, and the second parameter set;
receive an encrypted second random number and a second digital signature that are sent by the network authentication server, and decrypt the encrypted second random number based on the second-level key of the terminal device to obtain a second random number, where the encrypted second random number is obtained after the network authentication server encrypts the second random number by using the public key of the terminal device; and
after the second digital signature has been authenticated, generate the communication key of the terminal device based on the second parameter set and at least one of the first random number and the second random number by using a key derivation function; generate a first message authentication code based on the communication key, the first random number, the second random number, and the second parameter set, or generate a third digital signature based on the second-level key, the first random number, the second random number, and the second parameter set; and send the first message authentication code or the third digital signature to the network authentication server, so that the network authentication server attempts to authenticate the first message authentication code or the third digital signature; where
the second parameter set includes at least one of a user identifier of the user management server, a device identifier of the terminal device, a network identifier of the user management server, and a service parameter.

In a thirteenth feasible authentication manner, the key receiving module 1801 is further configured to receive a public key of the user management server and a second parameter set that are sent by the user management server, where the public key of the user management server is a public key of the terminal device that is corresponding to the second-level key of the terminal device; and the authentication module 1802 is specifically configured to:
determine a first random number and a first transmission parameter of a DH protocol, and send an authentication request message to the network authentication server, where the authentication request message includes the public key of the terminal device, the first random number, the first transmission parameter, and the second parameter set;
receive a second transmission parameter, a second random number, and a second digital signature that are sent by the network authentication server, and perform a DH key agreement algorithm based on the first transmission parameter and the second transmission parameter to obtain a third transmission parameter; and
after the second digital signature has been authenticated, generate the communication key of the terminal device based on the third transmission parameter and at least one of the first random number, the second random number, and the second parameter set by using a key derivation function; generate a first message authentication code based on the communication key, the first transmission parameter, the second transmission parameter, and at least one of the first random number, the second random number, and the second parameter set by using a message authentication code generation function, or generate a third digital signature based on the second-level key, the first transmission parameter, the second transmission parameter, and at least one of the first random number, the second random number, and the second parameter set; and send the first message authentication code or the third digital signature to the network authentication server, so that the network authentication server attempts to authenticate the first message authentication code or the third digital signature; where
the second parameter set includes at least one of a user identifier of the user management server, a device identifier of the terminal device, a network identifier of the user management server, and a service parameter.

In the authentication manner based on the identity key technology, the terminal device further includes a public key request module, configured to send a public key request message to the network authentication server; and the key receiving module is further configured to receive the public key of the network authentication server that is sent by the network authentication server. Optionally, the authentication module 1802 is specifically configured to: perform mutual authentication with the network authentication server, and generate a session key of the terminal device based on any one of the communication key, the second parameter set, a random number of the session key, a fresh parameter of the session key, and a preset time parameter of the session key by using a key derivation function.

Still another aspect of the embodiments of the present invention provides a network authentication server to execute the key authentication method in the foregoing embodiment, so as to implement signaling interaction with the terminal device and complete mutual authentication. This aspect has the same technical features and technical effects as the foregoing method embodiment.

As described in the foregoing method embodiment, a mutual authentication process performed by the network authentication server includes at least an authentication manner based on a symmetric key technology and an authentication manner based on an identity key technology.

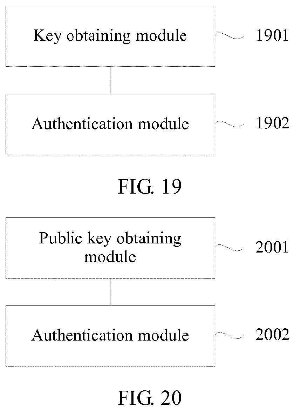

In the authentication manner based on the symmetric key technology, the network authentication server provided in the embodiments of the present invention is described in detail with reference to FIG. 19. FIG. 19 is a schematic structural diagram of Embodiment 1 of the network authentication server according to the present invention. As shown in FIG. 19, the server includes:
a key obtaining module 1901, configured to: receive an authentication request message sent by a terminal device, where the authentication request message includes a first parameter set, send a second key request message to a service center server, and receive a second-level key sent by the service center server, where the second key request message includes the first parameter set; or receive an authentication request message sent by a terminal device, where the authentication request message includes a first parameter set, send a second key request message to a service center server, receive a first-level key sent by the service center server, and generate a second-level key of the terminal device based on the first-level key and the first parameter set by using a key derivation function; and
an authentication module 1902, configured to perform mutual authentication with the terminal device based on the second-level key, to obtain a communication key for communication between the terminal device and a functional network element; where
the first parameter set includes at least one of a user identifier of the user management server, a device identifier of the terminal device, a network identifier of the user management server, a service parameter, a key random number of the second-level key, a fresh parameter of the second-level key, and a time parameter of the second-level key.

In the authentication manner based on the symmetric key technology, an authentication manner of the authentication module 1902 includes the following possible implementations.

In a first feasible authentication manner, the authentication request message further includes an encrypted first random number, and the authentication module 1902 is specifically configured to:
decrypt the encrypted first random number based on the second-level key to obtain a first random number, determine a second random number, and encrypt the second random number by using the second-level key, to obtain an encrypted second random number, where the encrypted first random number is obtained after the terminal device encrypts the first random number by using the second-level key;
generate the communication key of the network authentication server based on a second parameter set and at least one of the second-level key, the first random number, and the second random number by using the key derivation function; generate a second message authentication code based on the first random number, the second random number, the second parameter set, and either of the communication key and the second-level key; and send the encrypted second random number and the second message authentication code to the terminal device; and
receive a first message authentication code sent by the terminal device, and send the communication key to the functional network element after the first message authentication code has been authenticated; where
the second parameter set includes at least one of the user identifier of the user management server, the device identifier of the terminal device, the network identifier of the user management server, and the service parameter.

In a second feasible authentication manner, the authentication request message further includes a first random number, and the authentication module 1902 is specifically configured to:
determine a second random number; generate the communication key of the network authentication server based on the second-level key and at least one of the first random number, the second random number, and a second parameter set by using the key derivation function; generate a second message authentication code based on the first random number, the second random number, the second parameter set, and either of the communication key and the second-level key; and send the second random number and the second message authentication code to the terminal device; and
receive a first message authentication code sent by the terminal device, and send the communication key to the functional network element after the first message authentication code has been authenticated; where
the second parameter set includes at least one of the user identifier of the user management server, the device identifier of the terminal device, the network identifier of the user management server, and the service parameter.

In a third feasible authentication manner, the authentication request message further includes a first random number, and the authentication module 1902 is specifically configured to:
determine a second random number; generate the communication key of the network authentication server based on a key random number; encrypt the communication key by using the second-level key, to obtain an encrypted communication key; generate a second message authentication code based on the first random number, the second random number, a second parameter set, and either of the communication key and the second-level key; and send the second random number, the encrypted communication key, and the second message authentication code to the terminal device; and
receive a first message authentication code sent by the terminal device, and send the communication key to the functional network element after the first message authentication code has been authenticated; where
the second parameter set includes at least one of the user identifier of the user management server, the device identifier of the terminal device, the network identifier of the user management server, and the service parameter.

In a fourth feasible authentication manner, the authentication request message further includes a first transmission parameter and a first random number, and the authentication module 1902 is specifically configured to:
determine a second random number and a second transmission parameter of a DH protocol, and perform a DH key agreement algorithm based on the first transmission parameter and the second transmission parameter to obtain a third transmission parameter;
generate the communication key of the network authentication server based on the third transmission parameter and at least one of the first random number, the second random number, and a second parameter set by using the key derivation function; generate a second message authentication code based on the first transmission parameter, the second transmission parameter, the second parameter set, and either of the communication key and the second-level key; and send an encrypted second random number and the second message authentication code to the terminal device; and
receive a first message authentication code sent by the terminal device, and send the communication key to the functional network element after the first message authentication code has been authenticated; where
the second parameter set includes at least one of the user identifier of the user management server, the device identifier of the terminal device, the network identifier of the user management server, and the service parameter.

In a fifth feasible authentication manner, the authentication request message further includes a first message authentication code and an encrypted first random number, and the authentication module 1902 is specifically configured to:
decrypt the encrypted first random number based on the second-level key to obtain a first random number, determine a second random number, and encrypt the second random number by using the second-level key, to obtain an encrypted second random number, where the encrypted first random number is obtained after the terminal device encrypts the first random number by using the second-level key; and
after the first message authentication code has been authenticated, generate the communication key of the network authentication server based on a second parameter set and at least one of the second-level key, the first random number, and the second random number by using the key derivation function; generate a second message authentication code based on either of the communication key and the second-level key and at least one of the first random number, the second random number, and the second parameter set; and send the encrypted second random number and the second message authentication code to the terminal device, and send the communication key to the functional network element; where
the second parameter set includes at least one of the user identifier of the user management server, the device identifier of the terminal device, the network identifier of the user management server, and the service parameter.

In a sixth feasible authentication manner, the authentication request message further includes a first message authentication code and a first random number, and the authentication module 1902 is specifically configured to:
determine a second random number; after the first message authentication code has been authenticated, generate the communication key of the network authentication server based on the second-level key and at least one of the first random number, the second random number, and a second parameter set by using the key derivation function; generate a second message authentication code based on either of the communication key and the second-level key and at least one of the first random number, the second random number, and the second parameter set; and send the encrypted second random number and the second message authentication code to the terminal device, and send the communication key to the functional network element; where
the second parameter set includes at least one of the user identifier of the user management server, the device identifier of the terminal device, the network identifier of the user management server, and the service parameter.

In a seventh feasible authentication manner, the authentication request message further includes a first message authentication code and a first random number, and the authentication module 1902 is specifically configured to:
determine a second random number; after the first message authentication code has been authenticated, generate the communication key of the network authentication server based on a key random number; encrypt the communication key by using the second-level key, to obtain an encrypted communication key; generate a second message authentication code based on either of the communication key and the second-level key and at least one of the first random number, the second random number, and a second parameter set; and send the second random number, the encrypted communication key, and the second message authentication code to the terminal device, and send the communication key to the functional network element; where
the second parameter set includes at least one of the user identifier of the user management server, the device identifier of the terminal device, the network identifier of the user management server, and the service parameter.

In an eighth feasible authentication manner, the authentication request message further includes a first message authentication code and an encrypted first random number, and the authentication module 1902 is specifically configured to:
decrypt the encrypted first random number based on the second-level key to obtain a first random number, determine a second random number, and encrypt the second random number by using the second-level key, to obtain an encrypted second random number, where the encrypted first random number is obtained after the terminal device encrypts the first random number by using the second-level key; and
after the first message authentication code has been authenticated, generate the communication key of the terminal device based on a second parameter set and at least one of the second-level key and the first random number by using the key derivation function; generate a second message authentication code based on either of the communication key and the second-level key and at least one of the first random number, the second random number, and the second parameter set; and send the encrypted second random number and the second message authentication code to the terminal device, and send the communication key to the functional network element; where
the second parameter set includes at least one of the user identifier of the user management server, the device identifier of the terminal device, the network identifier of the user management server, and the service parameter.

In a ninth feasible authentication manner, the authentication request message further includes a first message authentication code and a first random number, and the authentication module 1902 is specifically configured to:
determine a second random number; after the first message authentication code has been authenticated, generate the communication key of the terminal device based on the second-level key and at least one of the first random number and a second parameter set by using the key derivation function; generate a second message authentication code based on either of the communication key and the second-level key and at least one of the first random number, the second random number, and the second parameter set; and send the second random number and the second message authentication code to the terminal device, and send the communication key to the functional network element; where
the second parameter set includes at least one of the user identifier of the user management server, the device identifier of the terminal device, the network identifier of the user management server, and the service parameter.

In a tenth feasible authentication manner, the authentication request message further includes a first message authentication code, a first transmission parameter, and a first random number, and the authentication module 1902 is specifically configured to:
determine a second random number and a second transmission parameter of a DH protocol, and perform a DH key agreement algorithm based on the first transmission parameter and the second transmission parameter to obtain a third transmission parameter; and
after the first message authentication code has been authenticated, generate the communication key of the network authentication server based on the third transmission parameter and at least one of the first random number, the second random number, and a second parameter set by using the key derivation function; generate a second message authentication code based on either of the communication key and the second-level key and any one of the first random number, the second random number, the first transmission parameter, the second transmission parameter, and the second parameter set; and send the second random number and the second message authentication code to the terminal device, and send the communication key to the functional network element; where
the second parameter set includes at least one of the user identifier of the user management server, the device identifier of the terminal device, the network identifier of the user management server, and the service parameter.

In the authentication manner based on the asymmetric key technology, the network authentication server provided in the embodiments of the present invention is described in detail with reference to FIG. 20. FIG. 20 is a schematic structural diagram of Embodiment 2 of the network authentication server according to the present invention. As shown in FIG. 20, the network authentication server includes:
a public key obtaining module 2001, configured to receive an authentication request message sent by a terminal device, where the authentication request message includes a public key of the terminal device; and
an authentication module 2002, configured to perform mutual authentication with the terminal device based on the public key of the terminal device, a public key of the network authentication server, and a private key of the network authentication server, to obtain a communication key for communication between the terminal device and a functional network element.

In the authentication manner based on the asymmetric key technology, an authentication manner of the authentication module 2002 includes the following possible implementations.

In an eleventh feasible authentication manner, the authentication request message further includes a first digital signature, an encrypted first random number, and a second parameter set, and the authentication module 2002 is specifically configured to:
decrypt the encrypted first random number based on the private key of the network authentication server to obtain a first random number, determine a second random number, and encrypt the second random number by using the public key of the terminal device, to obtain an encrypted second random number, where the encrypted first random number is obtained after the terminal device encrypts the first random number by using the public key of the network authentication server;
after the first digital signature has been authenticated, generate the communication key of the network authentication server based on the second parameter set and at least one of the first random number and the second random number by using a key derivation function; generate a second digital signature based on the private key of the network authentication server, the first random number, the second random number, and the second parameter set; and send the second digital signature and the encrypted second random number to the terminal device; and
receive a first message authentication code or a third digital signature sent by the terminal device, and send the communication key to the functional network element after the first message authentication code or the third digital signature has been authenticated; where
the second parameter set includes at least one of a user identifier of the user management server, a device identifier of the terminal device, a network identifier of the user management server, and a service parameter.

In a twelfth feasible authentication manner, the authentication request message further includes an encrypted first random number and a second parameter set, and the authentication module 2002 is specifically configured to:
decrypt the encrypted first random number based on the private key of the network authentication server to obtain a first random number, determine a second random number, and encrypt the second random number by using the public key of the terminal device, to obtain an encrypted second random number, where the encrypted first random number is obtained after the terminal device encrypts the first random number by using the public key of the network authentication server;
generate the communication key of the network authentication server based on the second parameter set and at least one of the first random number and the second random number by using a key derivation function; generate a second digital signature based on the private key of the network authentication server, the first random number, the second random number, and the second parameter set; and send the encrypted second random number and the second digital signature to the terminal device; and
receive a first message authentication code or a third digital signature sent by the terminal device, and send the communication key to the functional network element after the first message authentication code or the third digital signature has been authenticated; where
the second parameter set includes at least one of a user identifier of the user management server, a device identifier of the terminal device, a network identifier of the user management server, and a service parameter.

In a thirteenth feasible authentication manner, the authentication request message further includes a first random number, a first transmission parameter, and a second parameter set; a public key of the user management server is the public key of the terminal device that is corresponding to a second-level key of the terminal device; and the authentication module 2002 is specifically configured to:
determine a second random number and a second transmission parameter of a DH protocol, and perform a DH key agreement algorithm based on the first transmission parameter and the second transmission parameter to obtain a third transmission parameter;
generate the communication key of the network authentication server based on the third transmission parameter and at least one of the first random number, the second random number, and the second parameter set by using a key derivation function; generate a second digital signature based on the private key of the network authentication server, the first transmission parameter, the second transmission parameter, and at least one of the first random number, the second random number, and the second parameter set; and send the second random number, the second transmission parameter, and the second digital signature to the terminal device; and
receive a first message authentication code or a third digital signature sent by the terminal device, and send the communication key to the functional network element after the first message authentication code has been authenticated or after the third digital signature has been authenticated based on the public key of the terminal device; where
the second parameter set includes at least one of a user identifier of the user management server, a device identifier of the terminal device, a network identifier of the user management server, and a service parameter.

In any one of the foregoing authentication manners based on the identity key technology, the server further includes: a public key request receiving module, configured to receive a public key request message sent by the terminal device; and a public key sending module, configured to send the public key of the network authentication server to the terminal device.

Optionally, in the authentication manners based on the symmetric key technology and based on the identity key technology, the authentication module 1902 or the authentication module 2002 may further be specifically configured to: perform mutual authentication with the terminal device, generate a session key of the network authentication server based on any one of the communication key, the second parameter set, a random number of the session key, a fresh parameter of the session key, and a preset time parameter of the session key by using a key derivation function, and send the session key to the functional network element.

Optionally, the terminal device shown in FIG. 18 and the network authentication server shown in FIG. 20 may be further configured to execute the sixth to the thirteenth possible authentication implementations shown in FIG. 8 to FIG. 15.

Still another aspect of the embodiments of the present invention provides a storage medium. The storage medium is a computer-readable storage medium storing one or more programs. The one or more programs include instructions. When the instruction is executed by an electronic device including a plurality of application programs, the electronic device executes any one of the foregoing methods in the embodiments of the key distribution method executed by the service center server.

Still another aspect of the embodiments of the present invention provides a storage medium. The storage medium is a computer-readable storage medium storing one or more programs. The one or more programs include instructions. When the instruction is executed by an electronic device including a plurality of application programs, the electronic device executes any one of the foregoing methods in the embodiments of the key distribution method executed by the user management server.

Still another aspect of the embodiments of the present invention provides a storage medium. The storage medium is a computer-readable storage medium storing one or more programs. The one or more programs include instructions. When the instruction is executed by an electronic device including a plurality of application programs, the electronic device executes any one of the foregoing methods in the embodiments of the key authentication method executed by the terminal device.

Still another aspect of the embodiments of the present invention provides a storage medium. The storage medium is a computer-readable storage medium storing one or more programs. The one or more programs include instructions. When the instruction is executed by an electronic device including a plurality of application programs, the electronic device executes any one of the foregoing methods in the embodiments of the key distribution method executed by the network authentication server.

Still another aspect of the embodiments of the present invention provides a key distribution and authentication system to execute the key distribution and authentication method in the foregoing embodiment. The key distribution and authentication system has the same technical features and technical effects as the key distribution and authentication method in the foregoing embodiment. The system includes the service center server in any one of the foregoing embodiments, the user management server in any one of the foregoing embodiments, the terminal device in any one of the foregoing embodiments, and the network authentication server in any one of the foregoing embodiments.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

In the specification, claims, and accompanying drawings of the present invention, the terms "first", "second", "third", "fourth", and so on (if existent) are intended to distinguish between similar objects but do not necessarily indicate a specific order or sequence. It should be understood that the data termed in such a way are interchangeable in proper circumstances so that the embodiments of the present invention described herein can be implemented in orders except the order illustrated or described herein. Moreover, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, system, product, or device.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

## Claims

1. A key authentication method, comprising:
sending (S202), by a service center server (101), a first-level key to a network authentication server (104) and also to a user management server (102),
generating, by the user management server (102), a second-level key of a terminal device (103) based on the first-level key using a first parameter set, and sending, by the user management server (102), the first parameter set to a network authentication server (104);
generating, by the network authentication server (104), based on the first-level key and the first parameter set, by using a key derivation function, a second-level key, said second-level key is the same as the second-level key of the terminal device (103) generated by the user management server (102);
receiving (S203), by a terminal device (103), the second-level key and the first parameter set from the user management server (102);
performing (204), by the terminal device (103), mutual authentication with the network authentication server (104) based on the second-level key, to obtain a communication key for communication between the terminal device (103) and a functional network element (105), the performing (204) comprises:
determining (S501), by the terminal device (103), a first random number, encrypting the first random number by using the second-level key to obtain an encrypted first random number; generating a first message authentication code based on the second-level key and at least one of the first parameter set and the first random number by using a message authentication code generation function; and sending an authentication request message to the network authentication server (104), wherein the first message authentication code and the authentication request message are sent to the network authentication server (104) to enable the terminal device (103) and the network authentication server (104) to perform mutual authentication based on symmetric key technology;
decrypting, by the network authentication server (104), the encrypted first random number based on the second-level key to obtain the first random number, determining a second random number, and encrypting the second random number by using the second-level key, to obtain an encrypted second random number; after the first message authentication code has been authenticated, generating the communication key of the network authentication server (104) based on the first parameter set and at least one of the second-level key, the first random number, and the second random number by using the key derivation function; generating a second message authentication code based on either of the communication key and the second-level key and at least one of the first random number, the second random number, and the first parameter set; and sending the encrypted second random number and the second message authentication code to the terminal device, and sending the communication key to the functional network element (105);
receiving, by the terminal device (103), the second message authentication code and the encrypted second random number and the second message authentication code from the network authentication server (104), and decrypting the encrypted second random number based on the second-level key to obtain the second random number; and after the terminal device (103) has authenticated the second message authentication code, generating, by the terminal device (103), the communication key based on the first parameter set and at least one of the second-level key, the first random number, and the second random number by using a key derivation function; wherein
the first parameter set comprises at least one of a user identifier of the user management server (102), a device identifier of the terminal device (103), a network identifier of the user management server (102), a service parameter, a key random number of the second-level key, a fresh parameter of the second-level key, and a time parameter of the second-level key.

2. A terminal device (103), comprising:
a key receiving module (1801), configured to receive a second-level key of the terminal device (103) and a first parameter set that is sent by a user management server (102); and
an authentication module (1802), configured to perform mutual authentication with a network authentication server (104) based on the second-level key, to obtain a communication key for communication between the terminal device (103) and a functional network element (105),
wherein the authentication module (1802) is, in performing mutual authentication, further configured to:
determine a first random number, encrypt the first random number, generate a first message authentication code based on the second-level key and at least one of the first parameter set and the first random number by using a message authentication code generation function; and send the first message authentication code and an authentication request message to the network authentication server (104), wherein the authentication request message comprises the first parameter set and the first random number, the first parameter set is configured to be send to the network authentication server (104) to enable the terminal device (103) and the network authentication server (104) to perform mutual authentication based on symmetric key technology;
receive an encrypted second random number and a second message authentication code based on either of a communication key and the second-level key and at least one of the first random number, the second random number, and the first parameter set that are sent by the network authentication server (104); and
decrypt the encrypted second random number based on the second-level key to obtain the second random number, and after the second message authentication code has been authenticated, generate the communication key based on the second-level key and at least one of the first random number, the second random number, and the first parameter set by using a key derivation function; wherein
the first parameter set comprises at least one of a user identifier of the user management server, a device identifier of the terminal device (103), a network identifier of the user management server (102), a service parameter, a key random number of the second-level key, a fresh parameter of the second-level key, and a time parameter of the second-level key.

## Patentansprüche

1. Verfahren zur Authentifizierung von Schlüsseln, umfassend:
Senden (S202) eines Schlüssels der ersten Ebene durch einen Service-Center-Server (101) an einen Netzwerk-Authentifizierungsserver (104) und auch an einen Benutzerverwaltungsserver (102),
Erzeugen, durch den Benutzerverwaltungsserver (102), eines Schlüssels der zweiten Ebene einer Endgerätevorrichtung (103) basierend auf dem Schlüssel der ersten Ebene unter Verwendung eines ersten Parametersatzes, und Senden, durch den Benutzerverwaltungsserver (102), des ersten Parametersatzes an einen Netzwerkauthentifizierungsserver (104);
Erzeugen, durch den Netzwerkauthentifizierungsserver (104), basierend auf dem Schlüssel der ersten Ebene und dem ersten Parametersatz, unter Verwendung einer Schlüsselableitungsfunktion, eines Schlüssels der zweiten Ebene, wobei der Schlüssel der zweiten Ebene derselbe ist wie der Schlüssel der zweiten Ebene der Endgerätevorrichtung (103), der durch den Benutzerverwaltungsserver (102) erzeugt wurde;
Empfangen (S203), durch eine Endgerätevorrichtung (103), des Schlüssels der zweiten Ebene und des ersten Parametersatzes von dem Benutzerverwaltungsserver (102);
Durchführen (204), durch die Endgerätevorrichtung (103), einer gegenseitigen Authentifizierung mit dem Netzwerkauthentifizierungsserver (104) basierend auf dem Schlüssel der zweiten Ebene, um einen Kommunikationsschlüssel für eine Kommunikation zwischen der Endgerätevorrichtung (103) und einem funktionalen Netzwerkelement (105) zu erhalten, wobei das Durchführen (204) umfasst:
Bestimmen (S501), durch die Endgerätevorrichtung (103), einer ersten Zufallszahl, Verschlüsseln der ersten Zufallszahl unter Verwendung des Schlüssels der zweiten Ebene, um eine verschlüsselte erste Zufallszahl zu erhalten; Erzeugen eines ersten Nachrichtenauthentifizierungscodes basierend auf dem Schlüssel der zweiten Ebene und dem ersten Parametersatz und/oder der ersten Zufallszahl unter Verwendung einer Nachrichtenauthentifizierungscode-Erzeugungsfunktion; und
Senden einer Authentifizierungsanforderungsnachricht an den Netzwerkauthentifizierungsserver (104), wobei der erste Nachrichtenauthentifizierungscode und die Authentifizierungsanforderungsnachricht an den Netzwerkauthentifizierungsserver (104) gesendet werden, um die Endgerätevorrichtung (103) und den Netzwerkauthentifizierungsserver (104) in die Lage zu versetzen, eine wechselseitige Authentifizierung basierend auf einer symmetrischen Schlüsseltechnologie durchzuführen;
Entschlüsseln der verschlüsselten ersten Zufallszahl durch den Netzwerkauthentifizierungsserver (104) basierend auf dem Schlüssel der zweiten Ebene, um die erste Zufallszahl zu erhalten, Bestimmen einer zweiten Zufallszahl und Verschlüsseln der zweiten Zufallszahl unter Verwendung des Schlüssels der zweiten Ebene, um eine verschlüsselte zweite Zufallszahl zu erhalten; nachdem der erste Nachrichtenauthentifizierungscode authentifiziert worden ist, Erzeugen des Kommunikationsschlüssels des Netzwerkauthentifizierungsservers (104) basierend auf dem ersten Parametersatz und dem Schlüssel der zweiten Ebene und/oder der ersten Zufallszahl und/oder der zweiten Zufallszahl unter Verwendung der Schlüsselableitungsfunktion; Erzeugen eines zweiten Nachrichtenauthentifizierungscodes basierend auf entweder dem Kommunikationsschlüssel oder dem Schlüssel der zweiten Ebene und der ersten Zufallszahl und/oder der zweiten Zufallszahl und/oder dem ersten Parametersatz; und Senden der verschlüsselten zweiten Zufallszahl und des zweiten Nachrichtenauthentifizierungscodes an die Endgerätevorrichtung und Senden des Kommunikationsschlüssels an das funktionale Netzwerkelement (105);
Empfangen durch die Endgerätevorrichtung (103) des zweiten Nachrichtenauthentifizierungscodes und der verschlüsselten zweiten Zufallszahl und des zweiten Nachrichtenauthentifizierungscodes von dem Netzwerkauthentifizierungsserver (104), und Entschlüsseln der verschlüsselten zweiten Zufallszahl basierend auf dem Schlüssel der zweiten Ebene, um die zweite Zufallszahl zu erhalten und nachdem die Endgerätevorrichtung (103) den zweiten Nachrichtenauthentifizierungscode authentifiziert hat, Erzeugen des Kommunikationsschlüssels durch die Endgerätevorrichtung (103) basierend auf dem ersten Parametersatz und dem Schlüssel der zweiten Ebene und/oder der ersten Zufallszahl und/oder der zweiten Zufallszahl unter Verwendung einer Schlüsselableitungsfunktion; wobei
der erste Parametersatz einen Benutzeridentifikator des Benutzerverwaltungsservers (102) und/oder einen Vorrichtungsidentifikator der Endgerätevorrichtung (103) und/oder einen Netzwerkidentifikator des Benutzerverwaltungsservers (102) und/oder einen Serviceparameter und/oder eine Schlüsselzufallszahl des Schlüssels der zweiten Ebene und/oder einen Frischparameter des Schlüssels der zweiten Ebene und/oder einen Zeitparameter des Schlüssels der zweiten Ebene umfasst.

2. Endgerätevorrichtung (103), umfassend:
ein Schlüsselempfangsmodul (1801), das dazu konfiguriert ist, einen Schlüssel der zweiten Ebene des Endgerätes (103) und einen ersten Parametersatz, der durch die Endgerätevorrichtung (102) gesendet wird, zu empfangen; und
ein Authentifizierungsmodul (1802), das dazu konfiguriert ist, eine gegenseitige Authentifizierung mit einem Netzwerkauthentifizierungsserver (104) basierend auf dem Schlüssel der zweiten Ebene durchzuführen, um einen Kommunikationsschlüssel für die Kommunikation zwischen der Endgerätevorrichtung (103) und einem funktionalen Netzwerkelement (105) zu erhalten,
wobei das Authentifizierungsmodul (1802) bei der Durchführung der gegenseitigen Authentifizierung ferner dazu konfiguriert ist:
eine erste Zufallszahl zu bestimmen, die erste Zufallszahl zu verschlüsseln, einen ersten Nachrichtenauthentifizierungscode basierend auf dem Schlüssel der zweiten Ebene und dem ersten Parametersatz und/oder der ersten Zufallszahl unter Verwendung einer Nachrichtenauthentifizierungscode-Erzeugungsfunktion zu erzeugen; und den ersten Nachrichtenauthentifizierungscode und eine Authentifizierungsanforderungsnachricht an den Netzwerkauthentifizierungsserver (104) zu senden, wobei die Authentifizierungsanforderungsnachricht den ersten Parametersatz und die erste Zufallszahl umfasst, wobei der erste Parametersatz dazu konfiguriert ist, an den Netzwerkauthentifizierungsserver (104) gesendet zu werden, um die Endgerätevorrichtung (103) und den Netzwerkauthentifizierungsserver (104) in die Lage zu versetzen, eine gegenseitige Authentifizierung basierend auf einer symmetrischen Schlüsseltechnologie durchzuführen;
eine verschlüsselte zweite Zufallszahl und einen zweiten Nachrichtenauthentifizierungscode basierend auf entweder einem Kommunikationsschlüssel oder dem Schlüssel der zweiten Ebene und der ersten Zufallszahl und/oder der zweiten Zufallszahl und/oder dem ersten Parametersatz zu empfangen, die von dem Netzwerkauthentifizierungsserver (104) gesendet werden; und
die verschlüsselte zweite Zufallszahl basierend auf dem Schlüssel der zweiten Ebene zu entschlüsseln, um die zweite Zufallszahl zu erhalten, und, nachdem der zweite Nachrichtenauthentifizierungscode authentifiziert worden ist, den Kommunikationsschlüssel basierend auf dem Schlüssel der zweiten Ebene und der ersten Zufallszahl und/oder der zweiten Zufallszahl und/oder dem ersten Parametersatz unter Verwendung einer Schlüsselableitungsfunktion zu erzeugen; wobei
der erste Parametersatz einen Benutzeridentifikator des Benutzerverwaltungsservers und/oder einen Vorrichtungsidentifikator der Endgerätevorrichtung (103) und/oder einen Netzwerkidentifikator des Benutzerverwaltungsservers (102) und/oder einen Serviceparameter und/oder eine Schlüsselzufallszahl des Schlüssels der zweiten Ebene und/oder einen Frischparameter des Schlüssels der zweiten Ebene und/oder einen Zeitparameter des Schlüssels der zweiten Ebene umfasst.

## Revendications

1. Procédé d'authentification de clé, comprenant :
l'envoi (S202), par un serveur de centre de service (101), d'une clé de premier niveau à un serveur d'authentification de réseau (104) et également à un serveur de gestion d'utilisateur (102),
la génération, par le serveur de gestion d'utilisateur (102), d'une clé de deuxième niveau d'un dispositif terminal (103) sur la base de la clé de premier niveau à l'aide d'un premier ensemble de paramètres, et l'envoi, par le serveur de gestion d'utilisateur (102), du premier ensemble de paramètres à un serveur d'authentification de réseau (104) ;
la génération, par le serveur d'authentification de réseau (104), sur la base de la clé de premier niveau et du premier ensemble de paramètres, en utilisant une fonction de dérivation de clé, d'une clé de deuxième niveau, ladite clé de deuxième niveau étant la même que la clé de deuxième niveau du dispositif terminal (103) générée par le serveur de gestion d'utilisateur (102) ;
la réception (S203), par un dispositif terminal (103), de la clé de deuxième niveau et du premier ensemble de paramètres en provenance du serveur de gestion d'utilisateur (102) ;
la réalisation (204), par le dispositif terminal (103), d'une authentification mutuelle avec le serveur d'authentification de réseau (104) sur la base de la clé de deuxième niveau, pour obtenir une clé de communication pour une communication entre le dispositif terminal (103) et un élément de réseau fonctionnel (105), la réalisation (204) comprend :
la détermination (S501), par le dispositif terminal (103), d'un premier nombre aléatoire, le chiffrement du premier nombre aléatoire en utilisant la clé de deuxième niveau pour obtenir un premier nombre aléatoire chiffré ; la génération d'un premier code d'authentification de message sur la base de la clé de deuxième niveau et d'au moins un élément parmi le premier ensemble de paramètres et le premier nombre aléatoire en utilisant une fonction de génération de code d'authentification de message ; et l'envoi d'un message de demande d'authentification au serveur d'authentification de réseau (104), le premier code d'authentification de message et le message de demande d'authentification étant envoyés au serveur d'authentification de réseau (104) pour permettre au dispositif terminal (103) et au serveur d'authentification de réseau (104) de réaliser une authentification mutuelle sur la base d'une technologie de clé symétrique ;
le déchiffrement, par le serveur d'authentification de réseau (104), du premier nombre aléatoire chiffré sur la base de la clé de deuxième niveau pour obtenir le premier nombre aléatoire, la détermination d'un deuxième nombre aléatoire, et le chiffrement du deuxième nombre aléatoire en utilisant la clé de deuxième niveau, afin d'obtenir un deuxième nombre aléatoire chiffré ; après que le premier code d'authentification de message a été authentifié, la génération de la clé de communication du serveur d'authentification de réseau (104) sur la base du premier ensemble de paramètres et d'au moins un élément parmi la clé de deuxième niveau, le premier nombre aléatoire, et le deuxième nombre aléatoire en utilisant la fonction de dérivation de clé ; la génération d'un deuxième code d'authentification de message sur la base soit de la clé de communication, soit de la clé de deuxième niveau et d'au moins un élément parmi le premier nombre aléatoire, le deuxième nombre aléatoire, et le premier ensemble de paramètres ; et l'envoi du deuxième nombre aléatoire chiffré et du deuxième code d'authentification de message au dispositif terminal, et l'envoi de la clé de communication à l'élément de réseau fonctionnel (105) ;
la réception, par le dispositif terminal (103), du deuxième code d'authentification de message et du deuxième nombre aléatoire chiffré et du deuxième code d'authentification de message en provenance du serveur d'authentification de réseau (104), et le déchiffrement du deuxième nombre aléatoire chiffré sur la base de la clé de deuxième niveau pour obtenir le deuxième nombre aléatoire ; et après que le dispositif terminal (103) a authentifié le deuxième code d'authentification de message, la génération, par le dispositif terminal (103), de la clé de communication sur la base du premier ensemble de paramètres et d'au moins un élément parmi la clé de deuxième niveau, le premier nombre aléatoire, et le deuxième nombre aléatoire en utilisant une fonction de dérivation de clé ;
le premier ensemble de paramètres comprenant au moins un élément parmi un identifiant d'utilisateur du serveur de gestion d'utilisateur (102), un identifiant de dispositif du dispositif terminal (103), un identifiant de réseau du serveur de gestion d'utilisateur (102), un paramètre de service, un nombre aléatoire de clé de la clé de deuxième niveau, un paramètre récent de la clé de deuxième niveau, et un paramètre de temps de la clé de deuxième niveau.

2. Dispositif terminal (103), comprenant :
un module de réception de clé (1801), configuré pour recevoir une clé de deuxième niveau du dispositif terminal (103) et un premier ensemble de paramètres qui est envoyé par un serveur de gestion d'utilisateur (102) ; et
un module d'authentification (1802), configuré pour réaliser une authentification mutuelle avec un serveur d'authentification de réseau (104) sur la base de la clé de deuxième niveau, afin d'obtenir une clé de communication pour une communication entre le dispositif terminal (103) et un élément de réseau fonctionnel (105),
le module d'authentification (1802) étant, dans la réalisation d'une authentification mutuelle, configuré en outre pour :
déterminer un premier nombre aléatoire, chiffrer le premier nombre aléatoire, générer un premier code d'authentification de message sur la base de la clé de deuxième niveau et d'au moins un élément parmi le premier ensemble de paramètres et le premier nombre aléatoire en utilisant une fonction de génération de code d'authentification de message ; et envoyer le premier code d'authentification de message et un message de demande d'authentification au serveur d'authentification de réseau (104), le message de demande d'authentification comprenant le premier ensemble de paramètres et le premier nombre aléatoire, le premier ensemble de paramètres étant configuré pour être envoyé au serveur d'authentification de réseau (104) afin de permettre au dispositif terminal (103) et au serveur d'authentification de réseau (104) de réaliser une authentification mutuelle sur la base d'une technologie de clé symétrique ;
recevoir un deuxième nombre aléatoire chiffré et un deuxième code d'authentification de message sur la base soit d'une clé de communication, soit de la clé de deuxième niveau et d'au moins un élément parmi le premier nombre aléatoire,
le deuxième nombre aléatoire, et le premier ensemble de paramètres qui sont envoyés par le serveur d'authentification de réseau (104) ; et
déchiffrer le deuxième nombre aléatoire chiffré sur la base de la clé de deuxième niveau pour obtenir le deuxième nombre aléatoire, et après que le deuxième code d'authentification de message a été authentifié, générer la clé de communication sur la base de la clé de deuxième niveau et d'au moins un élément parmi le premier nombre aléatoire, le deuxième nombre aléatoire, et le premier ensemble de paramètres en utilisant une fonction de dérivation de clé ;
le premier ensemble de paramètres comprenant au moins un élément parmi un identifiant d'utilisateur du serveur de gestion d'utilisateur, un identifiant de dispositif du dispositif terminal (103), un identifiant de réseau du serveur de gestion d'utilisateur (102), un paramètre de service, un nombre aléatoire de clé de la clé de deuxième niveau, un paramètre récent de la clé de deuxième niveau, et un paramètre de temps de la clé de deuxième niveau.
